(19) Europäisches Patentamt
European Patent Office
Office européen des brevets

(11) EP 0 903 221 B1

(12) EUROPÄISCHE PATENTSCHRIFT

(45) Veröffentlichungstag und Bekanntmachung des Hinweises auf die Patenterteilung:
**25.03.2009 Patentblatt 2009/13**

(51) Int Cl.:
***B32B 27/36** (2006.01)*

(21) Anmeldenummer: **98117902.1**

(22) Anmeldetag: **22.09.1998**

(54) **Biaxial orientierte Polyesterfolie, Verfahren zu ihrer Herstellung und ihre Verwendung zum Verpacken von Leben- und Genussmittel**

Biaxially oriented laminated polyester film, process for its manufacture and use of it for the packaging of food

Film de polyester orienté biaxialement, procédé de sa fabrication et application du même dans l'emballage alimentaire

(84) Benannte Vertragsstaaten:
**DE FR GB IT LU NL**

(30) Priorität: **23.09.1997 DE 19741877**

(43) Veröffentlichungstag der Anmeldung:
**24.03.1999 Patentblatt 1999/12**

(73) Patentinhaber: **Mitsubishi Polyester Film GmbH**
**65203 Wiesbaden (DE)**

(72) Erfinder:
- **Peiffer, Herbert**
  **55126 Mainz (DE)**
- **Hilkert, Gottfried**
  **55291 Saulheim (DE)**
- **Roth, Werner**
  **65817 Eppstein (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 368 278**
**EP-A- 0 624 454**
**EP-A- 0 678 554**

- **DATABASE WPI Section Ch, Week 199732 Derwent Publications Ltd., London, GB; Class A23, AN 1997-346220 XP002143058 & JP 09 141797 A (TORAY IND INC), 3. Juni 1997 (1997-06-03)**

EP 0 903 221 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine biaxial orientierte koextrudierte Polyesterfolie mit einer Basisschicht B, die zumindest zu 80 Gew.-% aus einem thermoplastischen Polyester besteht und einer oder mehreren weiteren Schichten. Die Erfindung betrifft weiterhin ein Verfahren zur Herstellung der Polyesterfolie und ihre Verwendung.

Biaxial orientierte Polyesterfolien werden im Verpackungs- oder im industriellen Sektor hauptsächlich dort verwendet, wo ihre vorteilhaften Eigenschaften, d.h. eine gute Optik, hohe mechanische Festigkeiten, eine gute Sperrwirkung, insbesondere gegenüber Gasen, eine gute Dimensionsstabilität in der Wärme und eine ausgezeichnete Planlage benötigt werden.

Für die meisten Anwendungszwecke ist es z.B. aus werbewirksamen Gründen weiterhin wünschenswert, die optischen Eigenschaften der Polyesterfolien, insbesondere den Glanz und die Folientrübung, bei weiterhin guter Verarbeitbarkeit der Folie, zu verbessern. Ebenfalls wünschenswert ist es, die Barriereeigenschaften von Polyesterfolien zu verbessern, um z.B. in neue Anwendungen zu gelangen.

Im Stand der Technik wird dargestellt, wie die optischen Eigenschaften, insbesondere der Glanz und die Trübung, biaxial orientierter Polyesterfolien verbessert werden können.

In der EP-A-0 514 129 wird eine transparente Mehrschichtfolie beschrieben, die ein Primärschicht-Substrat aus Polymermaterial umfaßt, welches mindestens auf einer seiner Oberflächen eine Sekundärschicht aus Polymermaterial besitzt, die Glasperlen und Siliciumdioxidpartikel in bestimmten Konzentrationen und in bestimmten Größenverteilungen aufweist. Die Sekundärschicht kann auf einer bzw. auf beiden Seiten des Primärschicht-Substrates angeordnet sein. Mit der Folie werden die Trübung und die Verarbeitungseigenschaften verbessert, eine Lehre zur Verbesserung des Glanzes und der Barriereeigenschaften der Folie vermittelt die Schrift jedoch nicht. Auch finden sich in der Schrift keinerlei Hinweise darauf, wie die Topographie einer solchen Folie für die gleichzeitige Verbesserung von Glanz und Sauerstoffbarriere eingestellt werden soll.

In der EP 0 604 057 wird eine transparente Mehrschichtfolie beschrieben, die ein Primärschicht-Substrat aus Polymermaterial umfaßt, die im wesentlichen frei ist von Füllern, welches mindestens auf einer seiner Oberflächen eine Sekundärschicht aus Polymermaterial besitzt, die als Füller Silikon-Harz in einer Konzentration von 100 bis 1000 ppm enthält und einen mittleren Partikeldurchmesser von 1,5 bis 12,5 μm auf weist. Nachteilig an den Silikon-Partikeln ist, daß diese vergleichsweise teuer sind und für den Verpackungsmarkt keine akzeptable Lösung darstellen. Außerdem neigen Folien, die mit solchen Pigmenten ausgerüstet sind, beim Wickeln leichter zum Teleskopieren. Ebenfalls finden sich auch in dieser Schrift keinerlei Hinweise darauf, wie die Topographie einer solchen Folie für die gleichzeitige Verbesserung von Glanz und Sauerstoffbarriere eingestellt werden soll.

In vielen Fällen wird bei Lebensmittelverpackungen eine hohe Sperrwirkung gegenüber Gasen, Wasserdampf und Aromastoffen verlangt (gleichbedeutend mit einer geringen Durchlässigkeit oder geringen Permeation). Ein gängiges Verfahren, solche Verpackungen herzustellen, besteht darin, die dafür verwendeten Kunststoffolien mit Aluminium im Hochvakuum zu bedampfen bzw. zu metallisieren. Weitere gängige Verfahren bestehen darin, die Folien mit oxidischen Materialien (z.B. $SiO_x$, oder $Al_xO_y$) zu beschichten. Hierbei handelt es sich im wesentlichen um transparente Beschichtungen.

Die Sperrwirkung gegenüber den oben genannten Stoffen hängt im wesentlichen von der Art der Polymeren in der Folie und der Güte der aufgebrachten Sperrschichten ab. So wird mit metallisierten, biaxial orientierten Polyesterfolien eine sehr hohe Sperrwirkung gegenüber Gasen, wie Sauerstoff und Aromastoffen, erzielt. Gegenüber Wasserdampf erreicht man sie mit metallisierten, biaxial orientierten Polypropylenfolien.

Aufgrund ihrer guten Sperreigenschaften werden mit metallisierten oder oxidisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches).

Sollen Polyesterfolien mit einer aufgedampften Aluminiumschicht oder mit aufgebrachten oxidischen Schichten als Verpackungsmaterial verwendet werden, dann sind sie in der Regel Bestandteil eines mehrschichtigen Folienverbunds (Laminat). Daraus hergestellte Beutel lassen sich z.-B. auf einer vertikalen Schlauchbeutel-, Form-, Füll und Verschließmaschine (vffs) füllen. Die Beutel werden auf ihrer Innenseite (d.h. auf der dem Füllgut zugewandten Seite) gesiegelt, wobei die Siegelschicht in der Regel aus Polyethylen oder Polypropylen besteht. Der Folienverbund weist dabei den folgenden typischen Aufbau auf: Polyesterschicht/Aluminium- oder Oxidschicht/Kleberschicht/Siegelschicht. Bei einer Dicke des Laminats von etwa 50 bis 150 μm ist die Metall-oder Oxidschicht nur 10 bis 80 nm dick. Diese sehr dünne Funktionsschicht genügt bereits, um einen ausreichenden Lichtschutz und sehr gute Barriereeigenschaften zu erreichen.

Die Sauerstoffbarriere bzw. die Sauerstoffdurchlässigkeit wird in der Regel nicht an dem Laminat oder der Verpackung selbst, sondern an der metallisierten Polyesterfolie gemessen. Um die Qualität der Lebens- oder Genußmittel auch bei längeren Lagerzeiten zu gewährleisten, darf die Sauerstoffdurchlässigkeit (gleich Permeation) der metallisierten

Folie nicht mehr als 2 $cm^3/m^2$ bar d, insbesondere aber nicht mehr als 1,5 $cm^3/m^2$ bar d betragen. Zukünftig geht die Forderung der Verpackungsindustrie in Richtung einer noch weiter erhöhten Barriere, wobei Permeationswerte der metallisierten oder oxidisch beschichteten Folien von deutlich weniger als 1,0 $cm^3/m^2$ bar d angestrebt werden.

Nach dem Stand der Technik ist es weder hinreichend bekannt, worauf die Barrierewirkung von metallisierten oder oxidisch beschichteten Polyesterfolien im einzelnen beruht noch wie diese entscheidend zu verbessern ist. Wichtige Einflußgrößen sind offensichtlich die Substratoberfläche, die Art des Substratpolymers sowie dessen Morphologie. Allgemein wird davon ausgegangen, daß glatte Substratoberflächen bessere Barriereeigenschaften ergeben.

In "Thin Solids Films" 204 (1991), S. 203-216, wurde hierzu von Weiss u.a. der Einfluß der Rauhigkeit einer Substratschicht auf die Permeation untersucht. Dazu wurden Polyesterfolien mit Lack beschichtet, der in unterschiedlichen Konzentrationen Titandioxidpartikel enthielt. In den beschriebenen Experimenten wurde die Konzentration an Titandioxidpartikel im Lack zwischen 2 und 20 Gew.-% variiert. Die Rauhigkeit $R_a$ der gecoateten Substratoberfläche konnte mit dieser Methode von 43 nm (unlackierte und lackierte Folie, ohne Titandioxid) bis 124 nm variiert werden. In seinen Experimenten ergaben sich mit steigender Rauhigkeit (steigendem $TiO_2$ -Anteil) der lackierten Oberfläche eindeutig höhere Sauerstoffdurchlässigkeiten nach dem Aluminiumbedampfen. Der allerdings größte Sprung in der Sauerstoffdurchlässigkeit wurde für die lackierte Folie (0 Gew.-%) gegenüber der unlackierten Folie festgestellt. In beiden Fällen war die Rauhigkeit der Substratoberfläche jedoch gleich groß. Allein durch das Lackieren der Folie verschlechterte sich die Barriere von ca. 0,43 $cm^3/m^2$ d bar (plain film) auf ca. 19 $cm^3/m^2$ d bar (lackierte Folie). Eine weitere Unsicherheit hinsichtlich der Übertragbarkeit dieser Lehre auf kommerzielle Produkte entsteht dadurch, daß die Aluminiumschicht mittels Laborverdampfer aufgebracht wurde. Hierbei werden im Vergleich zum Industriemetallisierer wesentlich niedrige Permeationswerte erreicht, und der Einfluß der Substratoberfläche auf die Barriereeigenschaften wird verschmiert.

Weitere detaillierte Untersuchungsergebnisse über den Einfluß der Substratoberfläche von Polyesterfolien auf die Barriereeigenschaften sind in der Dissertation von H. Utz (Technische Universität München 1995: "Barriereeigenschaften aluminiumbedampfter Kunststoffolien") zu finden.

Nach den Untersuchungen von Utz (S. 66, ff) besteht zwischen der Oberflächenrauhigkeit (Mittenrauhigkeit $R_a$) der PET-Folie und der Sauerstoffbarriere kein unmittelbarer Zusammenhang. Die als besonders glatt hervorgehobene Videofolie mit einem Mittenrauhigkeitswert von $R_a$ = 22 nm hat z.B. mit 1,3 $cm^3/m^2$ bar d eine mit der viel rauheren PET II-Folie ($R_a$ = 220 nm) vergleichbare Sauerstoffdurchlässigkeit von 1,2 $cm^3/m^2$ bar d.

Die EP-A 0 624 454 betrifft einen biaxial orientierten Polyesterfilm, dessen Hauptkomponente Polyester ist, wobei der Kristallisationsparameter $\Delta T_{cg}$ des Polyesters nicht über 70 °C beträgt. Auf der Oberfläche des Films sind Vorsprünge ausgebildet, deren Anzahl ≥5 x $10^3$/$mm^2$ Oberfläche beträgt. Das Verhältnis $N_R$ zwischen der Anzahl an Vorsprüngen und der Anzahl an Teilchen, die in der Oberflächenschicht enthalten sind, ist nicht kleiner als 5. Die Vorsprünge auf der Oberfläche werden aufgrund der Kristallisation des Polyesters gebildet. Die Ausbildung der Vorsprünge wird bevorzugt ohne das Hinzufügen von inerten Partikeln erzielt. Das Verfahren zur Herstellung dieses Polyesterfilms umfasst folgende Schritte: eine Wärmebehandlung zumindest einer Oberfläche eines nicht gereckten Films, dessen Hauptkomponente Polyester mit einem Kristallisationsparameter $\Delta T_{cg}$ von nicht mehr als 70 °C ist, bei einer Temperatur von 100 bis 250 °C für 0,5 bis 150 s sowie das Beschleunigen der Kristallisation der zumindest einen Oberfläche durch die Wärmebehandlung; das biaxiale Recken des wärmebehandelten nicht-gereckten Films, so dass auf einer Oberfläche des biaxial gereckten Films Vorsprünge in eine Anzahl von nicht weniger als 5 x $10^3$/$mm^2$ gebildet werden und das Verhältnis $N_R$ zwischen der Anzahl an Vorsprüngen und der Anzahl an Teilchen, die in einer Oberflächenschicht, welche die Oberfläche des biaxial gereckten Films bildet, enthalten sind, nicht weniger als 5 beträgt.

In der Derwent-Publikation XP-002143058, DATA BASE WPI ist eine zweischichtige Polyesterfolie, bestehend aus einer Basisschicht B und einer Deckschicht A, beschrieben. Der Abstand zwischen Vorsprüngen auf der Deckschicht A ist kleiner/gleich 30 μm, wobei mehr als 80 % der Vorsprünge durch Kristallisation entstehen. Der Polyester der Deckschicht A enthält 0,01 bis 15 Gew.-% Polyalkylenglykol.

In der EP-A 0368 278 ist eine Polyester laminierte Struktur aus einer Basisschicht und zwei Polyalkylenterephthalat-Deckschichten beschrieben, wobei diese Struktur biaxial orientiert sein kann. Die verstreckte Polyesterfolie ohne Deckschichten kann mit Metall beschichtet sein. Bei der Herstellung von Polyethylenterephthalat werden heterogene Katalysatoren verwendet, nicht jedoch bei der Herstellung der Deckschichten. Es ist auch keine Rede davon, dass die Oberfläche der Polyesterfolie Vorsprünge aufweisen soll.

Die EP-A-0 124 291 beschreibt eine einschichtige, biaxial orientierte Polyesterfolie für magnetische Aufzeichnungsbänder, die durch folgende Oberflächeneigenschaften gekennzeichnet ist

a) die mittlere Rauhigkeit $R_a$ beträgt 1 nm bis 16 nm,
b) der Reibungskoeffizient μk liegt zwischen 0,01 bis 0,20 und
c) zwischen $R_a$ und μk besteht folgende Beziehung

$$0,1 < 10 * R_a + \mu k < 0,31.$$

Diese Eigenschaften werden durch Einsatz von $TiO_2$-Partikeln (Anatas) oder $TiO_2$- und $CaCO_3$-Partikeln in einem Gewichtsanteil von 0,1 bis 0,5 % bzw. 0,1 bis 0,3 % erzeugt. Der Durchmesser der $TiO_2$-Partikeln liegt zwischen 0,1 und 0,5 µm. Die Oberfläche dieser Folie wird durch eine Vielzahl von Erhebungen/Vorsprünge gebildet, die einer Verteilung derart gehorchen, daß der Graph, der durch die folgende Beziehung beschrieben werden

$$\log y = - 8,0 x + 4,34, \qquad y > 10$$

nicht gekreuzt werden. In dieser Gleichung bedeutet x (µm) einen Abstand in Höhenrichtung von einem Standard Level und y die Anzahl an Erhebungen (Anzahl/$mm^2$), wenn die Erhebungen bei einer Höhe von x geschnitten werden. Die Verteilung der Erhebungen wird mit einem Standard-Rauhigkeitsmeßgerät bestimmt. Mit der Lehre dieser Schrift werden zwar die Verarbeitungseigenschaften der Folie verbessert, eine Lehre zur Verbesserung des Glanzes, der Trübung und der Barriereeigenschaften der Folie vermittelt die Schrift jedoch nicht. Auch finden sich in der Schrift keinerlei Hinweise darauf, wie die Topographie einer solchen Folie für die gleichzeitige Verbesserung von Glanz und Sauerstoffbarriere eingestellt werden soll.

Die EP-A-0 490 665 A1 beschreibt eine einschichtige, biaxial orientierte Polyesterfolie für magnetische Aufzeichnungsbänder, die

a) 0,05 bis 1,0 Gew.-% ω-Aluminiumoxid mit einem durchschnittlichen Teilchendurchmesser im Bereich von 0,02 bis 0,3 µm, und
b) 0,01 bis 1,5 Gew.-% inerte Partikel anderen Typs als ω-Aluminiumoxid mit einem durchschnittlichen Teilchendurchmesser im Bereich von 0,1 bis 1,5 µm enthält, wobei diese Partikel größer sind als die ω-Aluminiumoxidteilchen.

Die Oberfläche dieser Folie wird durch eine Vielzahl von Erhebungen/Vorsprünge gebildet, die durch die Beziehung

$$-11,4 x + 4 < \log y < -10,0 x + 5 \qquad y > 30, x > 0,05 \mu m$$

beschrieben werden. In dieser Gleichung bedeutet x (µm) ein Abstand in Höhenrichtung von einem Standard Level und y die Anzahl an Erhebungen (Anzahl/$mm^2$), wenn die Erhebungen bei einer Höhe von x geschnitten werden. Die Verteilung der Erhebungen wird wie bei der EP-A-0 124 291 gemessen. Bezüglich Verbesserung des Glanzes, der Trübung und der Barriereeigenschaften vermittelt diese Schrift wie die vorhergenannte keine Lehre. Auch finden sich darin keinerlei Hinweise, wie die Topographie einer solchen Folie für die gleichzeitige Verbesserung von Glanz und Sauerstoffbarriere eingestellt werden soll.

Nach dem Stand der Technik sind weiterhin Folien bekannt, die sich dadurch auszeichnen, daß ihre beiden Oberflächen unterschiedlich rauh sind (dual surface). Diese Folien sind insbesondere für magnetische Aufzeichnungsmedien geeignet und zeichnen sich im wesentlichen durch unterschiedliche Topographien aus (z.B. Oberfläche A glatt, Oberfläche B rauh). Im allgemeinen werden mit der Lehre dieser Schriften die Verarbeitungseigenschaften der Folie verbessert, nicht aber die optischen Eigenschaften. Insbesondere aber vermitteln diese Schriften keine Lehre zur Verbesserung der Barriereeigenschaften der Folie.

Die DE-A-16 94 404 beschreibt einen Schichtstoff mit einer Mehrzahl von Schichten eines orientierten kristallisierbaren thermoplastischen Filmes, worin mindestens eine der äußeren Schichten einen Zusatz enthält. Die Zusätze sind übliche inerte anorganische oder organische Partikel, die im Falle von inerten Partikeln wie $SiO_2$ in einer Konzentration von 1 bis 25 Gew.-% den äußeren Schichten zugegeben werden. Die Teilchengröße beträgt dabei 2 bis 20 µm. Die Schichtstoffe können z.B. für dekorative Zwecke mit Aluminium metallisiert oder für Magnetbänder verwendet werden. Mit der Lehre dieser Schrift können zwar die Verarbeitungseigenschaften und die Trübung der Folie verbessert werden, eine Lehre zur Verbesserung des Glanzes und der Barriereeigenschaften der Folie vermittelt die Schrift jedoch nicht. Auch finden sich in der Schrift keinerlei Hinweise darauf, wie die Topographie einer solchen Folie für die gleichzeitige Verbesserung von Glanz und Sauerstoffbarriere eingestellt werden soll.

Die DE-A-22 30 970 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Die Folie ist dadurch gekennzeichnet, daß sie

a) eine beschichtete Oberfläche A enthält, die teilchenfrei ist und

i) mindestens 4 μm dick ist oder
ii) mindestens 50 % der Dicke der gesamten Folienlage ausmacht; und

b) eine teilchenhaltige zweite Schicht mit verhältnismäßig rauher Oberfläche enthält, die

i) mindestens 1 % einzelne Teilchen eines bestimmten Polymerisates A und
ii) mindestens 1 % einzelne Teilchen eines bestimmten Polymerisates B enthält.

Nachteilig an der Folie ist, daß die Oberfläche A zum Verblocken neigt, so daß eine gute Verarbeitung der Folie nicht gegeben ist. Eine Lehre zur Verbesserung des Glanzes, der Trübung und der Barriereeigenschaften der Folie wird in der Schrift nicht aufgezeigt. Auch finden sich in der Schrift wiederum keinerlei Hinweise darauf, wie die Topographie einer solchen Folie für die gleichzeitige Verbesserung von Glanz und Sauerstoffbarriere eingestellt werden soll.

Die EP-B-0 061 769 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Gegebenenfalls ist auf der anderen Oberfläche B der Polyesterfolie noch eine Schmiermittelschicht vorhanden. Die Folie ist dadurch gekennzeichnet, daß die beschichtete Oberfläche A

a) eine mittlere Rauhigkeit $R_a$ (Gipfel-Tal-Wert) von nicht mehr als 5 nm (60 nm) hat,
b) die Zahl der Vorsprünge mit einer Höhe von 0,27 bis 0,54 μm 0 bis 0,2/$mm^2$ ist und
c) frei ist von Vorsprüngen mit einer Höhe von größer als 0,54 μm.

Nachteilig an der Folie ist, daß die Oberfläche A zum Verblocken neigt, so daß eine gute Verarbeitung der Folie nicht gegeben ist. Eine Lehre zur Verbesserung des Glanzes, der Trübung und der Barriereeigenschaften der Folie wird in der Schrift nicht aufgezeigt. Auch finden sich in der Schrift keinerlei Hinweise darauf, wie die Topographie einer solchen Folie für die gleichzeitige Verbesserung von Glanz und Sauerstoffbarriere eingestellt werden soll.

Die EP-B-0 088 635 beschreibt eine coextrudierte biaxial orientierte Polyesterfolie mit wenigstens zwei Schichten, von denen eine Schicht A aus thermoplastischem Harz besteht, und einer Schicht B, die thermoplastisches Harz und feine Teilchen enthält.

Die Folie ist dadurch gekennzeichnet, daß die Oberflächenrauhigkeit $R_a$ der äußeren Oberfläche der Schicht A kleiner als 5 nm ist und die äußere Oberfläche der Schicht B entweder

i) eine Oberfläche mit einer Oberflächenrauhigkeit $R_a$ von 5 bis 40 nm ist und eine Vielzahl von Vertiefungen und eine Vielzahl von Vorsprüngen aufweist, die in einer bestimmten Anordnung angeordnet sind oder
ii) eine Oberfläche ist, die auf einer ebenen Fläche gebildete Vorsprünge aufweist und deren Oberfläche mit einer Schicht C bedeckt ist, die aus einem Schmiermittel besteht und eine Oberflächenrauhigkeit $R_a$ von 5 bis 40 nm aufweist.

Nachteilig an dieser Folieoberfläche ist, daß sie gegen sich selbst und gegenüber bestimmte andere Oberflächen (z.B. Gummiwalzen) blockt. Die Folie läßt sich nicht wirtschaftlich verarbeiten, insbesondere beim Metallisieren im Vakuum neigt diese Folie infolge der hohen Blockneigung zu Abrissen, was mit großem wirtschaftlichen Schaden verbunden sein kann. Die Folie ist im Sinne der zu lösenden Aufgabe nicht geeignet. Außerdem ist die Trübung der Folie verbesserungsbedürftig.

Die EP-B-0 502 745 beschreibt eine coextrudierte biaxial orientierte Polyesterfolie mit wenigstens drei Schichten, von denen eine äußere Schicht A

a) anorganische Teilchen mit einer mittleren Primärteilchengröße D im Bereich von 1 bis 100 nm enthält, die der Gleichung $D<T<200D$ genügt, worin T die Dicke der Schicht A ist,
b) Teilchen B mit einer mittleren Primärteilchengröße D1 im Bereich von 0,3 bis 2 μm enthält, wobei die Primärteilchen-Größenverteilung eine relative Standardardabweichung von höchstens 0,6 besitzt, und
c) die mittlere Primärteilchengröße D der Teilchen A geringer ist als die mittlere Primärteilchengröße D1 der Teilchen B.

Durch Anwendung der Lehre dieser Schrift wird insbesondere das Verarbeitungsverhalten der Folie verbessert. Eine Lehre zur Verbesserung des Glanzes, der Trübung und der Barriereeigenschaften der Folie wird in der Schrift nicht aufgezeigt. Auch finden sich in der Schrift keinerlei Hinweise darauf, wie die Topographie einer solchen Folie für die

gleichzeitige Verbesserung von Glanz und Sauerstoffbarriere eingestellt werden soll.

Weiterhin ist bekannt, daß sich durch eine besondere Auswahl der Polymere für die als Substrat dienende Folie die Sauerstoffbarriere verbessern läßt (Schricker, G.: Metallisierte Kunststoffolien für höherwertige Verpackungen. In: ICI 5th International Metallising Symposium 1986, Cannes). Besonders geeignet sind beispielsweise Polyester, speziell solche aus Ethylenglykol und Terephthalsäure oder aus Ethylenglykol, Terephthalsäure und Naphthalin-2,6-dicarbonsäure. Daneben sind auch Polyamide, Ethylen-Vinylalkohol-Copolymere (EVOH) und Polyvinylidenchlorid vorteilhaft verwendbar. So beschreibt beispielsweise die US-A 5 506 014 einen Copolyester aus (a) 45 bis 85 mol-% Terephthalsäure, (b) 10 bis 40 mol-% Naphthalindicarbonsäure und (c) 5 bis 15 mol-% einer Dicarbonsäure mit 2 bis 8 Kohlenstoffatomen und (d) Ethylenglykol (die Molprozente beziehen sich auf den Gesamtanteil an Dicarbonsäuren). Dieser Polyester soll sich durch verbesserte Barriereeigenschaften gegenüber Gasen auszeichnen. Verwendet wird er u.a. für die Herstellung von Flaschen oder Behältern sowie von Folien unterschiedlicher Stärke. Nachteilig an den genannten Rohstoffen ist, daß sie gegenüber Polyethylenterephthalat (PET) deutlich teurer oder für die Anwendung in der Lebensmittelverpackung ungeeignet bzw. nicht amtlich zugelassen sind.

Aufgabe der vorliegenden Erfindung ist es, eine biaxial orientierte, koextrudierte Polyesterfolie zur Verfügung zu stellen, die nach einer Metallisierung oder nach einer Beschichtung mit oxidischen Materialien einer Deckfläche eine hohe Sauerstoffbarriere aufweist. Des weiteren soll sie sich durch sehr gute optische Eigenschaften auszeichnen, d.h. eine geringe Trübung und insbesondere einen hohen Glanz, zumindest einer Folienoberfläche (im folgenden als Oberfläche A bezeichnet) aufweist. Eine solche Oberfläche A ist z.B. besonders vorteilhaft für eine Bedruckung oder für eine Metallisierung geeignet. Der hohe Glanz der Folie überträgt sich auf den Druck und auf die Metallschicht und sorgt somit für ein besonders brillantes Aussehen der Verpackung. Dies gilt sowohl für die Bedruckung der Folie im Konterdruck als auch im Frontaldruck.

Bei der Herstellung von Prägefolien, bei denen die Metallschicht von der Polyesterfolie auf einen Träger aus z.B. Pappe, Papier oder Kunststoff transferiert wird, bleibt der hohe metallische Glanz auf dem Träger erhalten und gibt dem Prägedruck ein besonderes werbewirksames Erscheinungsbild.

Darüber hinaus soll die Folie sich durch eine gute Herstellbarkeit und Verarbeitbarkeit auszeichnen. Zusammengefaßt besteht die Aufgabe darin, eine Folie mit folgender Merkmalkombination zur Verfügung zu stellen:

- geringe Sauerstoffpermeation der Folie nach Metallisierung oder nach Beschichtung mit oxidischen Materialien der Oberfläche A
- geringe Reibungskoeffizienten (kein Blocken der Folie gegen sich selbst)
- hoher Glanz, insbesondere der Oberfläche A
- geringe Trübung.

Geringe Sauerstoffpermeation bedeutet im vorliegenden Fall, daß durch die metallisierte oder die oxidisch beschichtete Folie weniger als 0,5 $cm^3$ Sauerstoff pro Quadratmeter und pro Tag diffundieren sollen, wenn Luft mit einem Druck von 1 bar darauf lastet.

Der Glanz der Oberfläche A soll größer als 180 und die Trübung der Folie soll kleiner als 1,5 sein. Die Oberfläche der einen Folienseite soll so beschaffen sein, daß sie nicht gegen sich selbst blockt (ein Verblocken findet statt, wenn der Reibwert größer als 1 ist oder bei der Reibkraftmessung in der Reibkraft-Weg-Verlauf Messung Unstetigkeitsstellen auftreten). Die Oberfläche der anderen Folienseite soll einen Reibungskoeffizienten aufweisen, der kleiner als 0,5 ist.

Die Folie soll den bekannten Verpackungsfolien dieser Art in den übrigen Eigenschaften mindestens gleichwertig sein. Sie soll sich beispielsweise einfach und preiswert herstellen lassen, sowie auf den herkömmlichen Maschinen gut verarbeiten lassen (d.h. z.B. nicht Blocken).

Gelöst wird die Aufgabe durch eine biaxial orientierte, coextrudierte Polyesterfolie mit einer Basisschicht B, die zu mindestens 80 Gew.-% aus einem thermoplastischen Polyester besteht und einer oder mehreren weiteren Schichten, wobei mindestens eine äußere Deckschicht A interne Partikel, die als Präzipitate von Umesterungskatalysatoren aus der Gruppe der Mn- oder Ca-Salze bei der Rohstoffherstellung für die Deckschicht A entstehen, in einer Menge entsprechend einem Mn-Gehalt im Bereich von 50 bis 200 ppm oder einem Ca-Gehalt im Bereich von 50 bis 300 ppm enthält und inerte Partikel in einer Konzentration zwischen 0 und 0.08 Gew.-%, wobei die äußere Deckschicht A eine Anzahl von Erhebungen/Vorsprüngen N pro $mm^2$ Folienoberfläche aufweist, deren Höhen h größer als 0,01 µm und kleiner als 10 µm sind und deren Durchmesser d größer als 0,4 µm und kleiner als 10 µm sind, und wobei zwischen N und h die Gleichung (1)

$$\log N/mm^2 < A_h - B_h * \log h/\mu m \qquad (1)$$

mit $A_h$ = 1,4 und $B_h$ = 2,5 und zwischen N und d die Gleichung (2)

$$\log N/mm^2 < A_d - B_d * \log d/\mu m, \qquad (2)$$

mit $A_d$ = 3,4und $B_d$ = 2,4 bestehen.

Unter Erhebungen/Vorsprünge im Sinne der vorliegenden Erfindung werden kegelige Erhebungen/Vorsprünge verstanden, die aus der planaren Folienoberfläche hervorragen.

Unter internen Partikeln werden Katalysatorrückstände verstanden, die bei der Polyesterrohstoffherstellung im Rohstoff verbleiben.

Unter inerten Partikeln werden Partikel verstanden, die dem Rohstoff additiv, z.B. bei dessen Herstellung dazugegeben werden.

Zur Erzielung hoher Sauerstoffbarrieren metallisierter oder oxidisch beschichteter Folien gemäß Aufgabenstellung muß entsprechend den Gleichungen (1) und (2) die Anzahl an Erhebungen/Vorsprüngen N pro $mm^2$ Folienoberfläche A unterhalb einem bestimmten Zahlenwert liegen. Dieser Zahlenwert ist durch die rechten Seiten der Gleichungen (1) und (2) in Abhängigkeit der Höhe h und dem Durchmesser d der Erhebungen/Vorsprünge eindeutig festgelegt.

Biaxial orientierte Polyesterfolien, die durch obige Gleichung beschrieben werden, zeichnen sich durch eine vergleichsweise geringe Anzahl von ErhebungenNorsprüngen der zu metallisierenden oder oxidisch zu beschichtenden Schicht A aus. Die Anzahl an Erhebungen/Vorsprünge ist im Bereich $h < 0,5\ \mu m$, besonders im Bereich $h < 0,4\ \mu m$ und ganz besonders im Bereich $h < 0,3\ \mu m$ deutlich geringer als es nach dem Stand der Technik bekannt ist.

Entscheidend für die Erzielung von hohen Sauerstoffbarrieren metallisierter oder oxidisch beschichteter Folien sind damit nicht niedrige Rauhigkeitswerte $R_a$ oder $R_z$, sondern vielmehr eine geringe Dichte an Erhebungen/Vorsprüngen $N/mm^2$ auf der Oberfläche A. In Figur 1 ist ein schematischer Vergleich zwischen Oberflächen wiedergegeben, die sich

a) durch eine gute Sauerstoffbarriere (niedrige Permeationswerte) gemäß der vorliegenden Erfindung auszeichnen (Fig. 1a) und
b) durch eine niedrige Sauerstoffbarriere (hohe Permeationswerte) auszeichnen (Fig. 1b).

Parameter in der Darstellung ist der mittlere Rauhigkeitswert $R_a$, der nach der folgenden Formel berechnet wurde

$$R_a = 1/L * \int_0^L f(x) * dx$$

Ist die Dichte der Erhebungen/Vorsprünge $N/mm^2$ klein (Figur 1a), so ist die Barriere im vorliegendem Sinne gut, ist die Dichte der Erhebungen/Vorsprünge dagegen groß (Figur 1b), so ist die Barriere im vorliegendem Sinne schlecht. Aus der Graphik geht weiterhin hervor, daß der $R_a$-Wert prinzipiell ohne Einfluß auf die Barriereeigenschaften ist. Eine glatte Folie (z. B. $R_a$ < 10 nm) kann dabei eine sehr schlechte Barriere aufweisen, sofern die Anzahl der Erhebungen/Vorsprünge $N/mm^2$ größer ist als nach den Gleichungen (1) und (2) berechnet. In diesem Fall enthält die Oberfläche/Oberflächenschicht sehr viele feine Partikel, die zum Betrag vom $R_a$-Wert jedoch keinen nennenswerten Beitrag liefern. Eine solche Oberfläche ist für die Erzielung hoher Barrierewerte denkbar ungeeignet. Für die Erzielung hoher Barrierewerte sehr gut geeignet sind dagegen Folienoberflächen, die vergleichsweise wenige Erhebungen/Vorsprünge N pro Flächeneinheit der Schicht A aufweisen. Dabei ist es eher von untergeordneter Bedeutung, ob die Erhebungen/Vorsprünge von großen Partikein/Teilchen oder von kleinen Partikeln/Teilchen hervorgerufen werden.

Während die $R_a$ -Werte für die Barriereeigenschaften keine praktische Bedeutung haben, so sind die $R_a$ -Werte für die Verarbeitung der erfindungsgemäßen Folie von praktischer Bedeutung. Auf der erfindungsgemäßen Folienoberfläche A mit verbesserter Verarbeitbarkeit ist der $R_a$-Wert größer als 6 nm, bevorzugt größer als 8 nm und besonders bevorzugt größer als 10 nm.

Die $R_a$-Werte der erfindungsgemäßen Folienoberfläche A sind nicht größer als 100 nm, vorteilhaft kleiner als 80 nm und insbesondere vorteilhaft kleiner als 70 nm.

Sind die $R_a$-Werte der erfindungsgemäßen Folienoberfläche kleiner als 6 nm, so wird die Verarbeitung, insbesondere die Wicklung der Folie problematisch. Sind die $R_a$-Werte der erfindungsgemäßen Folienoberfläche größer als 100 nm, so wird die Abriebfestigkeit dieser Oberfläche schlechter.

Ist die auf die Fläche normierte Anzahl an Erhebungen N auf der zu metallisierenden oder oxidisch zu beschichtenden Schicht A der Folie größer als die rechten Seiten der Gleichungen (1) oder (2), so ist die Sauerstoffpermeation größer als 0,5 $cm^3/m^2$ bar d, was gemäß der vorliegenden Aufgabenstellung unerwünscht ist. Weiterhin ist der Glanz dieser Folienoberfläche (im unmetallisierten bzw. nicht beschichteten Zustand) dann nicht mehr so hoch, wie es gemäß der vorliegenden Aufgabenstellung ebenfalls gewünscht ist.

In einer bevorzugten Ausführungsform der erfindungsgemäßen Folie besitzt die Konstante $A_h$ der vorgenannten Gleichung (1) den Wert $A_h$ = 1,18 und in einer besonders bevorzugten Ausführungsform den Wert $A_h$ = 1,0. In einer ebenfalls bevorzugten Ausführungsform der erfindungsgemäßen Folie besitzt die Konstante $B_h$ der vorgenannten Gleichung (1) den Wert $B_h$ = 2,2 und in einer besonders bevorzugten Ausführungsform den Wert $B_h$ = 2,1.

In einer bevorzugten Ausführungsform der erfindungsgemäßen Folie besitzt die Konstante $A_d$ der vorgenannten Gleichung (2) den Wert $A_d$ = 3,0 und in einer besonders bevorzugten Ausführungsform den Wert $A_d$ = 2,6. In einer ebenfalls bevorzugten Ausführungsform besitzt die Konstante $B_d$ der vorgenannten Gleichung (2) den Wert $B_d$ = 2,3 und in einer besonders bevorzugten Ausführungsform den Wert $B_d$ = 2,2.

In den bevorzugten und den besonders bevorzugten Ausführungsformen hat die erfindungsgemäße Schicht A ausgesprochen wenig Erhebungen/Vorsprünge N pro Oberflächeneinheit. Die metallisierte oder oxidisch beschichtete Folie zeichnet sich in diesem Fall durch eine besonders gute Sauerstoffbarriere aus. Die Permeationswerte der metallisierten oder oxidisch beschichteten Folie sind in der bevorzugten Ausführungsform kleiner als 0,45 $cm^3/m^2$ bar d und in der besonders bevorzugten Ausführungsform kleiner als 0,40 $cm^3/m^2$ bar d. Ebenfalls nimmt der Glanz dieser Seite dann ausgesprochen hohe Werte an. Der Glanz dieser Folienseite (im unmetallisierten bzw. im nicht beschichteten Zustand) ist in der besonders bevorzugten Ausführungsform größer als 200.

In Figur 2 sind die Gleichungen (1) und (2) graphisch dargestellt. In doppelt logarithmischer Darstellung sind beide Beziehungen Geraden, die durch die angegebenen numerischen Werte beschrieben werden.

Zu den Gleichungen (1) und (2) ähnliche Beziehungen werden nach dem Stand der Technik in den vorgenannten Schriften EP-A-0 124 291 und EP-A-0 490 665 angegeben. In diesen Schriften werden jedoch - wie bereits erwähnt - Folien beansprucht, mit ausgezeichneten Gleiteigenschaften, hervorgerufen durch viele sehr kleine Erhebungen ("...excellent slipperness of the polyester film of this invention is simultaneously achieved by the presence of the many very minute protusions" (page 7)), die viele inerte feine Partikel enthält ("contains many inert solid fine particles" (page 9), was bei den erfindungsgemäßen Folien gerade nicht der Fall ist.

Außerdem unterscheidet sich das nach dem Stand der Technik angewandte Meßverfahren deutlich von dem in dieser Anmeldung benutzten Meßverfahren (vgl. Beschreibung des Meßverfahrens). Dementsprechend können auch die Topographien der Folienoberflächen unterschiedlich sein, wie aus dem Vergleich der Graphen (Figur 3) und aus den Vergleichsbeispielen hervorgeht. Zur weiteren Veranschaulichung der Unterschiede zwischen den Meßverfahren und den daraus resultierenden Unterschieden in der Topographie der Folien ist in Figur 4 eine lichtmikroskopische Aufnahme (DIC, Differentiell Interference Contrast) an einer Polyesterfolie dargestellt. Dabei handelt es sich um eine Auflichtaufnahme einer mit Pigmenten gefüllten Polyesterfolie. Bei der hier (erfindungsgemäß) verwendeten Methode werden, wie nachfolgend beschrieben, sämtliche Erhebungen/Vorsprünge mittels Rasterelektronenmikroskop aufgenommen und mit einem Bildanalyseverfahren ausgewertet. Demgegenüber wird bei dem Meßverfahren nach dem Stand der Technik eine Nadel benutzt, mit der die Oberfläche in einem bestimmten Abstand abgetastet wird. Die Nadel hinterläßt geradlinige Spuren, wie im Bild zu erkennen sind. Weiterhin zeigt das Bild deutlich, daß bei dieser Methode

- nur wenige Pigmente erfaßt werden und
- die Pigmente nur zufällig getroffen werden.

Das Verfahren nach dem Stand der Technik ist damit nicht reproduzierbar und führt zu falschen Aussagen.

Anhand der Vergleichsbeispiele wird quantitativ aufgezeigt, daß die vorliegenden erfindungsgemäßen Folien im Vergleich zum Stand der Technik deutlich verschiedene Oberflächentopographien aufweisen.

Die Unteransprüche geben bevorzugte Ausführungsformen der Erfindung an, welche nachstehend zusätzlich erläutert werden.

Erfindungsgemäß ist die Folie zumindest zweischichtig. Sie umfaßt dann als Schichten eine Schicht B und die erfindungsgemäße Schicht A. In einer bevorzugten Ausführungsform der Erfindung ist die Folie dreischichtig aufgebaut und weist auf der einen Seite der Schicht B (=Basisschicht) die Schicht A und auf der anderen Seite der Schicht B eine weitere Schicht C aus Polyethylenterephthalat auf, die die für die Herstellung und Verarbeitung der Folie förderlichen Pigmente enthält. In diesem Fall bilden die beiden Schichten A und C die Deckschichten A und C.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x, x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders geeignet haben sich solche Verfahren erwiesen, bei denen Umesterungskatalysatoren eingesetzt werden, bei denen nur wenige und/oder nur kleine Erhebungen/Vorsprünge auf der Schicht A der Folie erzeugt werden. Bevorzugt sind hierbei insbesondere Magnesium- und Mangan- Salze. Diese Umesterungskatalysatoren werden bevorzugt bei der Herstellung des Basisrohstoffes, besonders bevorzugt aber bei der Herstellung des Rohstoffes für die Schicht A verwendet.

Folien mit der geforderten Topographie (Gleichungen (1) und (2)) werden erhalten, wenn Rohstoffe (insbesondere für die erfindungsgemäße Schicht A) eingesetzt werden, die unter Verwendung von Mn- oder Ca- Umesterungskatalysatoren verwendet werden, bei denen der Mn-Gehalt im Bereich von 50 bis 200 ppm der Ca-Gehalt im Bereich von 50 bis 300 ppm liegt. Hierdurch werden interne Partikel erzeugt, die zu Folien mit der erfindungsgemäßen Oberfläche führen.

Die hier angegeben Konzentrationen der Umesterungskatalysatoren beziehen sich auf Rohstoffe für die erfindungsgemäße Schicht A, bei der keine zusätzliche inerten Partikel eingesetzt werden. Bei Zusatz von inerten Partikeln wird zweckmäßigerweise der Gehalt an internen Partikeln reduziert.

Für die Schicht A können prinzipiell die gleichen Polymere verwendet werden, wie für die Basisschicht. Daneben können in der Schicht A auch andere Materialien enthalten sein, wobei dann die Schicht A bevorzugt aus einem Gemisch von Polymeren, einem Copolymeren oder einem Homopolymeren besteht, welches Ethylen-2,6-naphthalat-Einheiten und Ethylen-terephthalat-Einheiten enthalten. Bis zu 10 Mol-% der Polymere können aus weitere Comonomeren (s.o.) bestehen.

Für die andere Schicht (Deckschicht C) oder für eventuell vorhandene Zwischenschichten können prinzipiell die gleichen Polymere verwendet werden, wie zuvor für die Basisschicht und die Schicht A beschrieben.

Für die Verarbeitung der Polymere hat es sich als günstig erwiesen, die Polymere für die Basisschicht und die andere(n) Schicht(en) so zu wählen, daß sich die Viskositäten der jeweiligen Polymerschmelzen nicht zu sehr unterscheiden. Im anderen Fall ist mit zusätzlichen Erhebungen/Vorsprüngen, mit Fließstörungen oder mit Streifenbildung auf der fertigen Folie zu rechnen. Für die Beschreibung der Viskositätsbereiche der beiden Schmelzen wird eine modifizierte Lösungsmittelviskosität (SV-Wert oder "solution viscosity") verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie im Sinne der vorliegenden Erfindung zu gewährleisten, sollte der SV-Wert der Polymeren für die Schichten A oder C im Bereich von 500 bis 1200, bevorzugt im Bereich von 550 bis 1150, insbesondere bevorzugt im Bereich von 600 bis 1000 liegen. Falls notwendig, kann an den jeweiligen Granulaten eine Festphasenkondensation durchgeführt werden, um die benötigten SV-Werte der Materialien einzustellen. Die SV-Werte der Polymerschmelzen für Basis- und die andere(n) Schicht(en) sollten sich um nicht mehr als 200, vorzugsweise nicht mehr als 150, insbesondere aber nicht mehr als 100 Einheiten unterscheiden.

Die Basisschicht und die andere(n) Schicht(en) können zusätzlich übliche Additive, wie bspw. Stabilisatoren und/oder Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder

Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 5 Gew.-% erwiesen. Eine detaillierte Beschreibung der einsetzbaren Antiblockmittel findet sich beispielsweise in der EP-A-0 602 964.

Die erfindungsgemäße Schicht A wird zu Erfüllung der Gleichungen (1) bis (2) im allgemeinen nur wenig oder überhaupt nicht mit inerten Pigmenten gefüllt. Die Konzentration der inerten Partikeln in der Schicht A liegt zwischen 0 und 0,08 Gew.-%, vorzugsweise zwischen 0 und 0,065 Gew.-%, insbesondere zwischen 0 und 0,05 Gew.-% und ganz bevorzugt zwischen 0 und 0,04 Gew.-% und richtet sich im wesentlichen nach der Größe der eingesetzten Partikeln. Bevorzugte Partikel sind $SiO_2$ in kolloidaler und in kettenartiger Form. Die Partikeldurchmesser der eingesetzten Teilchen sind prinzipiell nicht eingeschränkt. Für die Lösung der Aufgabe hat es sich jedoch als günstig erwiesen, Teilchen mit einem mittleren Primärpartikeldurchmesser von kleiner als 60 nm, bevorzugt kleiner als 55 nm und besonders bevorzugt kleiner als 50 nm und/oder Teilchen mit einem mittleren Primärpartikeldurchmesser von größer als 1 µm, bevorzugt größer als 1,5 µm und besonders bevorzugt größer als 2 µm zu verwenden.

In dem Falle, wo der Schicht A keine inerten Partikel zugegeben werden, sollte z.B. durch eine geeignete Auswahl und Konzentration der Katalysatoren bei der Umesterungs- oder Polymerisationsreaktion sichergestellt werden, daß durch die sich bildenden Präzipitate ein Verblocken der Oberfläche A gegen sich selbst vermieden werden kann.

Bei der Auswahl der Pigmente, dem Pigmentdurchmesser und der Pigmentkonzentration für die andere(n) Schicht(en) (z.B. der Schicht B bei einer zweischichtigen Folie oder der Basisschicht B und der Deckschicht C bei einer dreischichtigen Folie) ist darauf zu achten, daß die Pigmentierung in diesen Schichten und die Schichtstärken dieser Schichten so gewählt wird, daß die Gleichungen (1) bis (5) nicht verletzt werden.

Die Pigmentierung der einzelnen, die Schicht A nicht betreffende Schichten kann danach sehr verschieden sein und richtet sich im wesentlichen nach dem Folienaufbau (Schichtaufbau) und den Anforderungen der Folie hinsichtlich Erzielung der weiteren optischen Eigenschaften (Trübung) und dem Herstellungs- und Verarbeitungsverhalten.

Handelt es sich beispielsweise um die bevorzugte dreischichtige Folie mit der Basisschicht B und den beiden Deckschichten A und C, so ist in der Basisschicht B die Partikelkonzentration vorzugsweise niedriger als in der zweiten Deckschicht C. Die Pigmentierung in der Basisschicht B sollte so gewählt werden, daß sie sich nicht nachhaltig auf die Anzahl der Erhebungen/Vorsprünge N in der erfindungsgemäßen Deckschicht auswirkt. Bei einer dreischichtigen Folie vom genannten Typ wird in der Basisschicht B die Partikelkonzentration zwischen 0 und 0,06 Gew.-%, vorzugsweise zwischen 0 und 0,04 Gew.-%, insbesondere zwischen 0 und 0,03 Gew.-% und ganz bevorzugt zwischen 0 und 0,02 Gew.-% liegen. Der Partikeldurchmesser der eingesetzten Teilchen ist prinzipiell nicht eingeschränkt, jedoch sind Teilchen mit einem mittleren Durchmesser von größer 1µm besonders bevorzugt.

Ist die Folie zweischichtig aufgebaut, wobei die Schicht A mehr als 50 %, insbesondere mehr als 65 % und besonders bevorzugt mehr als 80 % der Gesamtdicke der Folie ausmacht, so kann die Schicht B durchaus stärker pigmentiert (höhere Pigmentkonzentration) werden als im anderen Fall, bei dem die Schichtdicke der Schicht A vergleichbar klein ist (< 50 %).

Die erfindungsgemäße Polyesterfolie ist in einer besonders bevorzugten Ausführungsform dreischichtig aufgebaut und enthält dann noch eine Schicht C. Die beiden Schichten A und C bilden dann die Deckschichten A und C. Aufbau, Dicke und Zusammensetzung der zweiten Deckschicht C können unabhängig von der bereits vorhandenen Deckschicht A gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten. Diese zweite Deckschicht enthält im allgemeinen mehr Pigmente (d.h. höhere Pigmentkonzentrationen) als die erste erfindungsgemäße Deckschicht A. Die Pigmentkonzentration in dieser zweiten Deckschicht liegt zwischen 0,02 und 0,4 %, vorteilhaft zwischen 0,025 und 0,3 %, insbesondere zwischen 0,03 und 0,2 % und ganz besonders bevorzugt zwischen 0,035 und 0,15 %. Sie richtet sich z.B. nach dem gewünschten Verarbeitungsverhalten der Folie. Vorzugsweise wird/werden die Pigmentart/en, die Pigmentkonzentration/en und die Partikelkonzentration/en als auch die Schichtdickenverhältnisse so gewählt, daß eine gute Optik, sowie eine gute Herstellbarkeit und Verarbeitbarkeit der Folie gegeben ist.

Es hat sich als günstig erwiesen, die Herstellbarkeit und die Verarbeitbarkeit der Folie durch die folgenden Parameter der Seite C zu beschreiben

a) mittlere Rauhigkeit $R_{a,C}$
b) Haft-/Gleitreibung $\mu_C$ dieser Seite gegen sich selbst und durch die
c) Anzahl der Erhebungen/Vorsprünge $N_C/mm^2$ .

Vorteilhaft ist es, wenn die Folie so ausgebildet ist, daß auf dieser der efindungsgemäßen Deckschicht gegenüberliegenden Oberfläche C (oder B, bei einer zweischichtigen Folie)
a) der $R_a$-Wert zwischen 20 und 100 nm
b) die Haft-/Gleitreibung $\mu_C$ dieser Schicht gegen sich selbst kleiner als 0,5 und
c) die Anzahl der Erhebungen/Vorsprünge $N_C/mm^2$ durch die Gleichungen

$$A_{h2} - B_{h2} * \log (h/\mu m) < \log N_C/mm^2 < A_{h3} - B_{h3} * \log (h/\mu m) \qquad (3)$$

$$0{,}01\ \mu m < h < 10\ \mu m$$

$A_{h2} = -1{,}000$; $B_{h2} = 3{,}70$
$A_{h3} = 2{,}477$; $B_{h3} = 2{,}22$

$$A_{d2} - B_{d2} * \log (d/\mu m) < \log N_C/mm^2 < A_{d3} - B_{d3} * \log (d/\mu m) \qquad (4)$$

$$0{,}4\ \mu m < d < 10\ \mu m$$

$A_{d2} = 1{,}700$; $B_{d2} = 3{,}86$
$A_{d3} = 4{,}700$; $B_{d3} = 2{,}70$

ausgedrückt wird.

In einer bevorzugten Ausführungsform liegt der $R_a$-Wert zwischen 30 und 90 nm und insbesondere zwischen 35 und 80 nm.

In einer bevorzugten Ausführungsform ist die Haft-/Gleitreibung $F_C$ dieser Schicht gegen sich selbst kleiner als 0,45 und insbesondere kleiner als 0,40.

In einer bevorzugten Ausführungsform besitzen die Konstanten $A_{h2}$ bis $B_{h2}$ der Gleichung (3) die Werte $A_{h2}$ = - 0,523, $B_{h2}$ = 3,523, $A_{h3}$ = 2,300 und $B_{h3}$ = 2,3, in einer besonders bevorzugten Ausführungsform die Werte $A_{h2}$ =0,00, $B_{h2}$ = 3,300, $A_{h3}$ = 2,000 und $B_{h3}$ = 2,400 und ganz besonders bevorzugt die Werte $A_{h2}$ = 1,420, $B_{h2}$ = 2,500, $A_{h3}$ = 2,000 und $B_{h3}$ = 3,000.

In einer bevorzugten Ausführungsform besitzen die Konstanten $A_{d2}$ bis $B_{d3}$ der Gleichung (4) die Werte $A_{d2}$ = 2,00, $B_{d2}$ = 3,630, $A_{d3}$ = 4,40 und $B_{d3}$ = 2,70, in einer bevorzugten Ausführungsform die Werte $A_{d2}$ = 2,400, $B_{d2}$ = 3,720, $A_{d3}$ = 4,000 und $B_{d3}$ = 2,600 und ganz besonders bevorzugt die Werte $A_{d2}$ = 3,400, $B_{d2}$ = 2,400, $A_{d3}$ = 4,000 und $B_{d3}$ = 3,300.

Zwischen der Basisschicht und den Deckschicht(en) kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere im Bereich von 1,0 bis 10 µm und ganz besonders bevorzugt im Bereich von 1,0 bis 5 µm.

Bei der besonders vorteilhaften dreischichtigen Ausführungsform der erfindungsgemäßen Folie ist die Dicke der Deckschicht(en) A (und C) im allgemeinen größer als 0,1 µm und liegt allgemein im Bereich von 0,2 bis 3,0 µm, vorteilhaft im Bereich von 0,2 bis 2,5 µm, insbesondere im Bereich von 0,3 bis 2 µm und ganz besonders bevorzugt im Bereich von 0,3 bis 1,5 µm, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 50 µm, insbesondere 5 bis 45 µm, vorzugsweise 6 bis 40 µm, wobei die Schicht B einen Anteil von vorzugsweise etwa 5 bis 90 % an der Gesamtdicke hat.

Zur Herstellung der Schichten A und C (Deckschicht/en A und C) werden zweckmäßig Granulate aus Polyethylenterephthalat einem bzw. zwei Extrudern zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstrekkung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor der Bedruckung oder vor dem Aufbringen der metallischen oder oxidischen Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Sofern erwünscht, erfolgt das Aufbringen von Metall- oder oxidischen Schichten erfolgt auf üblichen industriellen Anlagen. Metallschichten aus Aluminium werden üblicherweise durch Bedampfen in herkömmlichen Metallisierern (Schiffchenmethode) hergestellt. Bei oxidischen Schichten haben sich daneben insbesondere Elektronenstrahlverfahren oder Aufsputtern bewährt. Die Verfahrensparameter der Anlage beim Aufbringen der Metallschicht bzw. der oxidischen Schicht auf die Folien entsprechen den Standardbedingungen. Die Metallisierung der Folien wird vorzugsweise so durchgeführt, daß die optische Dichte der metallisierten Folien im üblichen Bereich von ca. 2,2 bis 2,8 liegt. Das Aufbringen der oxidischen Schicht auf die Folie wird so durchgeführt, daß die Schichtstärke der Oxidschicht vorzugsweise im Bereich von 30 bis 100 nm liegt. Die Bahngeschwindigkeit der zu beschichtenden Folie liegt bei allen Einstellungen üblicherweise zwischen 5 und 20 m/s.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über inline coating mittels wäßriger Dispersionen vor der Querverstreckung auf die Folie aufzubringen.

Bei einer Metallisierung der Folie auf der erfindungsgemäßen Schicht A besteht die Metallschicht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die oxidische Schicht besteht bevorzugt aus Oxiden von Elementen der II., III. oder IV. Hauptgruppe des Periodensystems, insbesondere Oxiden des Magnesiums, Aluminiums oder Siliciums. Allgemein werden solche metallischen oder oxidischen Materialien verwendet, die bei vermindertem Druck bzw. im Vakuum aufgebracht werden können. Die Dicke der aufgebrachten Schicht beträgt allgemein 10 bis 100 nm.

Ein Vorteil der Erfindung besteht darin, daß die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einer Konzentration von 20 bis 50 Gew.-%, bezogen auf das Gesamtgewicht der Folie, wieder verwendet werden kann, ohne daß dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln. Speziell geeignet ist sie zur Herstellung von Vakuumverpackungen für Kaffee, insbesondere gemahlenem Kaffee.

Zusammengefaßt zeichnet sich die erfindungsgemäße Folie durch einen hohen Glanz, insbesondere einen hohen Glanz der Folienoberfläche A, und durch eine niedrige Trübung aus. Desweiteren besitzt die Folie eine hervorragende Sauerstoffbarriere, nachdem sie auf der Folienoberfläche A metallisiert oder mit oxidischen Materialien beschichtet worden ist. Außerdem besitzt sie ein gutes Wickel- und Verarbeitungsverhalten.

Der Glanz der Folienoberfläche A ist größer als 180. In einer bevorzugten Ausführungsform beträgt der Glanz dieser Seite mehr als 190 und in einer besonders bevorzugten Ausführungsform mehr als 200. Diese Folienoberfläche eignet sich daher insbesondere für die Bedruckung oder für die Metallisierung. Der hohe Glanz der Folie überträgt sich auf den Druck oder die aufgebrachte Metallschicht und verleiht somit der Folie das gewollte werbewirksame Aussehen.
Die Trübung der Folie ist kleiner als 1,5. In einer bevorzugten Ausführungsform beträgt die Trübung der Folie weniger als 1,3 und in einer besonders bevorzugten Ausführungsform weniger als 1,0. Durch die geringe Trübung der Folie eignet sich die Folie nicht nur für die Verpackung sondern auch z.B. für reprographische Anwendungen oder für "glazing"-Anwendungen.
Die Folie besitzt eine Sauerstoffbarriere von kleiner als 0,5 g $m^{-2}$ $d^{-1}$ $bar^{-1}$, vorzugsweise kleiner als 0,45 g $m^{-2}$ $d^{-1}$ $bar^{-1}$ und besonders bevorzugt kleiner als 0,4 g $m^{-2}$ $d^{-1}$ $bar^{-1}$, nachdem sie auf der Folienoberfläche A metallisiert oder mit oxidischen Materialien beschichtet worden ist.
Auf der Folienoberfläche A findet kein Verblocken statt. Der Reibungskoeffizient auf der zur A-Seite gegenüberliegenden Seite ist kleiner als 0,5. In einer bevorzugten Ausführungsform beträgt der Reibungskoeffizient der Folie dort weniger als 0,45 und in einer besonders bevorzugten Ausführungsform weniger als 0,4.
Die nachstehende Tabelle (Tabelle 1) faßt die wichtigsten erfindungsgemäßen Folieneigenschaften noch einmal zusammen.

**Tabelle 1**

| | erfindungsgemäßer Bereich | bevorzugt | besonders bevorzugt | Einheit | Meßmethode |
|---|---|---|---|---|---|
| Glanz, Seite A (Meßwinkel 20°)[i] | > 180 | > 190 | > 200 | | DIN 67 530 |
| Trübung[i] | < 1,5 | < 1,3 | < 1,0 | % | ASTM-D 1003-52 |
| Sauerstoffpermeation der metallisierten oder der oxidisch beschichteten Folie | < 0,5 | < 0,45 | < 0,40 | g $m^{-2}$ $d^{-1}$ $bar^{-1}$ | DIN 53 380, Teil 3 |
| Reibungskoeffizient: A-Seite gegen sich selbst<br>C- bzw. B-Seite gegen sich selbst | kein Blocken<br>< 0,5 | <0,45 | < 0,40 | | DIN 53 375 |
| mittlere Rauhigkeit $R_a$ C- bzw. B-Seite | 20-100 | 30 - 90 | 35 - 80 | nm | DIN 4768, bei einem Cut-off von 0,25 nm |
| [i] Gemessen an der nicht metallisierten Folie | | | | | |

Zur Charakterisierung der Rohstoffe und der Folien wurden die folgenden Methoden benutzt:

(1) Optische Dichte

Zur Messung der optischen Dichte wurde das Densitometer Macbeth TD-904 von Macbeth (Division of Kollmorgen Instruments Corp.) eingesetzt. Die optische Dichte ist definiert als OD = - lg $I/I_0$, wobei I: die Intensität des eingestrahlten Lichtes, $I_0$: die Intensität des ausgestrahlten Lichtes und $I/I_0$:die Transmission bedeuten.

(2) Sauerstoffbarriere

Die Messung der Sauerstoffbarriere an den metallisierten Folien erfolgte mit einem OX-TRAN 2/20 von Mocon Modern Controls (USA) entsprechend DIN 53 380, Teil 3.

(3) SV-Wert

Zur Bestimmung des SV-Wertes (SV = solvent viscosity) wurde eine Polyester-Probe in einem Lösungsmittel

(Dichloressigsäure) gelöst. Die Viskosität dieser Lösung sowie die Viskosität des reinen Lösungsmittels wurden in einem Ubbelohde-Viskosimeter gemessen. Aus den beiden Werten wurde der Quotient ermittelt, davon 1,000 abgezogen und dieser Wert mit 1000 multipliziert. Das Resultat war der SV-Wert ("solution viscosity").

(4) Reibung

Die Reibung wurde nach DIN 53 375 bestimmt. Die Reibung wurde 14 Tage nach der Produktion gemessen. Ein Verblocken findet statt, wenn der Reibwert größer als 1 ist oder bei der Reibkraftmessung in der Reibkraft-Weg-Verlauf Messung Unstetigkeitsstellen auftreten.

(5) Oberflächenspannung

Die Oberflächenspannung wurde mittels der sogenannten Tintenmethode (DIN 53 364) bestimmt.

(6) Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4E-Lochblende eine 1°-Spaltblende eingesetzt wurde.

(7) Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und werden von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

(8) Bestimmung der Korngrößen auf Folienoberflächen

Die Bestimmung der Größenverteilung von Antiblockmittelteilchen (Korngrößenverteilung) auf Folienoberflächen erfolgt mit einem Rasterelektronenmikroskop (z.B. DSM 982 Gemini, Fa. Leo GmbH (Zeiss)) in Verbindung mit einem Bildanalysensystem. Die gewählten Vergrößerungen waren in allen Fällen 1700 fach.
Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht an den Antiblockmittelteilchen ein Schattenwurf. Da die Schatten noch nicht elektrisch leitfähig sind, kann die Probe anschließend noch mit einem zweiten Metall (z.B. Gold) bedampft werden, wobei der Metalldampf dabei senkrecht auf die Probenoberfläche auftrifft.

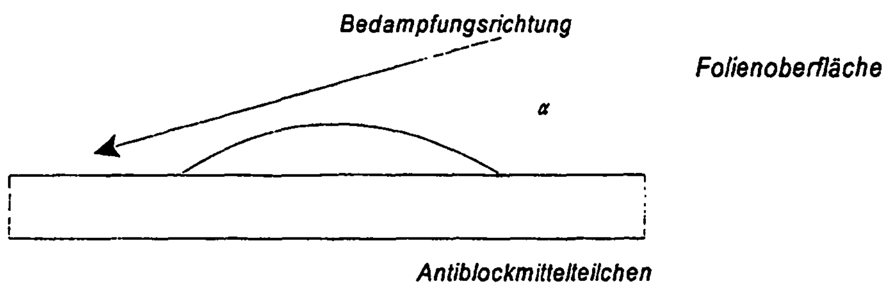


Die so präparierten Probenoberflächen werden in einem Rasterelektronenmikroskop (REM) abgebildet. Die Schatten der Antiblockmittelteilchen sind infolge des Materialkontrastes sichtbar. Die Probe wird im REM so orientiert, daß die Schatten parallel zum unteren Bildrand (x-Richtung) verlaufen. In dieser Einstellung werden REM-Bilder angefertigt und in ein Bildanalysesystem übertragen. Mit diesem Bildanalysesystem werden nun die Längen der Schatten

(in x-Richtung) und ihre maximale Ausdehnung in y-Richtung (parallel zum senkrechten Bildrand) vermessen.

Der Durchmesser D der Antiblockmittelteilchen in Höhe der Probenoberfläche ist gleich der maximalen Ausdehnung der Schatten d in y-Richtung. Die Höhe der Antiblockmittelteilchen, gemessen ab der Folienoberfläche errechnet sich aus dem Bedampfungswinkel $\alpha$ und der Schattenlänge L und unter Kenntnis der für die REM-Abbildung gewählten Vergrößerung V zu:

$$h = (\tan(\alpha) * L)/V$$

Um eine genügend hohe statistische Sicherheit zu erreichen, werden einige tausend Antiblockmittelteilchen vermessen. Für die Durchmesser und Höhen der Teilchen werden dann mit Hilfe der bekannten statistischen Methoden Häufigkeitsverteilungen erstellt. Für den Teilchendurchmesser D wird dazu eine Klassenbreite von 0,2 µm und für die Teilchenhöhe h eine Klassenbreite von 0,05 µm gewählt.

(9) <u>Rauhigkeit</u>

Die Rauhigkeit $R_a$ der Folie wurde nach DIN 4768 bei einem Cut-off von 0,25 mm bestimmt.

**Beispiel 1**

Chips aus Polyethylenterephthalat (hergestellt über das Umesterungsverfahren mit Mn als Umesterungskatalysator, Mn-Konzentration: 100 ppm) und wurden bei 160 °C auf eine Restfeuchte von unterhalb 50 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm), die entsprechend Tabelle 2 pigmentiert sind, ebenfalls bei 160 °C auf eine Restfeuchte von unterhalb 50 ppm getrocknet und den jeweiligen Extrudern für die Deckschichten A und C zugeführt.

Es wurde durch Coextrusion und anschließende stufenweise Orientierung in Längs- und Querrichtung eine transparente dreischichtige Folie mit ABC-Aufbau und einer Gesamtdicke von 12 µm hergestellt. Die Dicke der jeweiligen Schichten ist der Tabelle 2 zu entnehmen.

Deckschicht A, Mischung aus:

| | | |
|---|---|---|
| 94,0 | Gew.-% | Polyethylenterephthalat mit einem SV-Wert von 800 |
| 6,00 | Gew.-% | Masterbatch aus 99,0 Gew.-% Polyethylenterephthalat (SV-Wert von 800) und 0,5 Gew.-% Sylobloc® 44 H (kolloidale $SiO_2$ der Fa. Grace) und 0,5 Gew.-% Aerosil® TT 600 (kettenartiges $SiO_2$ der Fa. Degussa) |

Basisschicht B:

| | | |
|---|---|---|
| 100,0 | Gew.-% | Polyethylenterephthalat mit einem SV-Wert von 800 |

Deckschicht C, Mischung aus:

| | | |
|---|---|---|
| 84,0 | Gew.-% | Polyethylenterephthalat mit einem SV-Wert von 800 |
| 16,0 | Gew.-% | Masterbatch aus 99,0 Gew.-% Polyethylenterephthalat und 0,5 Gew.-% Sylobloc 44 H (Fa. Grace) und 0,5 Gew.-% Aerosil TT 600 (Fa. Degussa) |

Die Herstellungsbedingungen in den einzelnen Verfahrensschritten waren:

| | | | |
|---|---|---|---|
| Extrusion: | Temperaturen | A-Schicht: | 300 °C |
| | | B-Schicht: | 300 °C |
| | | C-Schicht: | 300 °C |
| | Düsenspaltweite: | | 1 mm |
| | Temperatur der Abzugswalze: | | 30 °C |

(fortgesetzt)

| | | |
|---|---|---|
| Längsstreckung: | Temperatur: | 80 - 125 °C |
| | Längsstreckverhältnis: | 4,0 |
| Querstreckung: | Temperatur: | 80 - 135 °C |
| | Querstreckverhältnis: | 4,0 |
| Fixierung: | Temperatur: | 230 °C |
| Dauer: | | 3 s |

Die Folie zeichnet sich durch sehr gute optische Eigenschaften und durch ein gutes Verarbeitungsverhalten aus (vgl. Tabelle 3).
Nach Herstellung der Folie (nach diesem Beispiel 1 und allen folgenden Beispielen) wurde diese auf der A-Seite in einem industriellen Metallisierer mit Aluminium unter Vakuum bedampft. Die Beschichtungsgeschwindigkeit betrug 8 m/s und die optische Dichte 2,6.
Die Folie hatte die geforderte hohe Sauerstoffbarriere. Der Folienaufbau und die erzielten Eigenschaften derart hergestellter Folien sind in den Tabellen 2 und 3 dargestellt. Figur 6 zeigt für die Deckschicht A die mittels der auf Seiten 31/32 beschriebenen Methode gemessenen Verteilungen für die Erhebungen/Vorsprünge N.

**Beispiel 2**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde nur die Deckschicht A geändert.
Deckschicht A, Mischung aus:

| | | |
|---|---|---|
| 98,0 | Gew.-% | Polyethylenterephthalat mit einem SV-Wert von 800 |
| 2,00 | Gew.-% | Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa) |

Die Verfahrensbedingungen waren für alle Schichten wie in Beispiel 1 gewählt.

**Beispiel 3**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde nur die Deckschicht A geändert.
Deckschicht A, Mischung aus:

| | | |
|---|---|---|
| 99,0 | Gew.-% | Polyethylenterephthalat mit einem SV-Wert von 800 |
| 1,00 | Gew.-% | Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa) |

Die Verfahrensbedingungen waren für alle Schichten wie in Beispiel 1 gewählt.

**Beispiel 4**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde nur die Deckschicht A geändert.
Deckschicht A, Mischung aus:

| | | |
|---|---|---|
| 98,0 | Gew.-% | Polyethylenterephthalat mit einem SV-Wert von 800 |
| 2,00 | Gew.-% | Masterbatch aus 99,75 Gew.-% Polyethylenterephthalat (SV-Wert von 800) und 0,25 Gew.-% Aerosil TT 600 (Fa. Degussa) |

Die Verfahrensbedingungen waren für alle Schichten wie in Beispiel 1 gewählt.

**Beispiel 5**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde nur die Deckschicht A geändert.

Deckschicht A, Mischung aus:

| | | |
|---|---|---|
| 98,0 | Gew.-% | Polyethylenterephthalat mit einem SV-Wert von 800 |
| 2,00 | Gew.-% | Masterbatch aus 99,75 Gew.-% Polyethylenterephthalat (SV-Wert von 800) und 0,25 Gew.-% Sylobloc 44 H (Fa. Grace) |

Die Verfahrensbedingungen waren für alle Schichten wie in Beispiel 1 gewählt.

**Beispiel 6**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde nur die Deckschicht A geändert.

Deckschicht A, Mischung aus:

| | | |
|---|---|---|
| 100,0 | Gew.-% | Polyethylenterephthalat mit einem SV-Wert von 800 |

Der Polyesterrohstoff für die Deckschicht A wurde über das Umesterungsverfahren mit Ca als Umesterungskatalysator hergestellt, wobei die Ca-Konzentration 200 ppm betrug.

Die Verfahrensbedingungen waren für alle Schichten wie in Beispiel 1 gewählt. Obwohl der Deckschicht A und der Basisschicht B additiv keine inerten Pigmente zugegeben wurden, enthält die Oberfläche der Deckschicht A Erhebungen / Vorsprünge. Diese rühren u.a. von den Präzipitaten des Umesterungskatalysators und Schwankungen im Herstellungsprozeß des Rohstoffes und der Folie her.

**Beispiel 7**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurden die Deckschichten A und C geändert.

Deckschicht A, Mischung aus:

| | | |
|---|---|---|
| 98,0 | Gew.-% | Polyethylenterephthalat mit einem SV-Wert von 800 |
| 2,00 | Gew.-% | Masterbatch aus 99,0 Gew.-% Polyethylenterephthalat (SV-Wert von 800) und 1,0 Gew.-% Sylobloc 44 H (Fa. Grace) |

Deckschicht C, Mischung aus:

| | | |
|---|---|---|
| 90,0 | Gew.-% | Polyethylenterephthalat mit einem SV-Wert von 800 |
| 10,0 | Gew.-% | Masterbatch aus 99,0 Gew.-% Polyethylenterephthalat (SV-Wert von 800) und 1,0 Gew.-% Sylobloc 44 H (Fa. Grace) |

**Beispiel 8**

In ähnlicher Weise wie in Beispiel 7 wurde durch Coextrusion und anschließende stufenweise Orientierung in Längs- und Querrichtung eine transparente dreischichtige Folie mit ABC-Aufbau und einer Gesamtdicke von 12 µm hergestellt. Im Vergleich zu Beispiel 1 wurde die Deckschicht A geändert.

Deckschicht A, Mischung aus:

| | | |
|---|---|---|
| 91,0 | Gew.-% | Polyethylenterephthalat mit einem SV-Wert von 800 |
| 1,00 | Gew.-% | Masterbatch aus 99,0 Gew.-% Polyethylenterephthalat (SV-Wert von 800) und 1,0 Gew.-% Sylobloc 44 H (Fa. Grace) |

**Vergleichsbeispiel 1**

Es wurde das Beispiel 1 aus der EP-A-0 514 129 nachgearbeitet. Der Glanz der Folie ist nicht zufriedenstellend. Die metallisierte Variante in 12 µm Dicke hat nicht die geforderten Barrierewerte.

**Vergleichsbeispiel 2**

Es wurde das Beispiel 1 aus der EP-A-0 604 057 nachgearbeitet. Der Glanz der Folie ist nicht zufriedenstellend. Die metallisierte Variante in 12 µm Dicke hat nicht die geforderten Barrierewerte. Außerdem stellt die Folie hinsichtlich Verwendung im Verpackungsmarkt keine wirtschaftliche Lösung dar.

**Vergleichsbeispiel 3**

Es wurde das Beispiel 1 aus der EP-A-0 124 291 nachgearbeitet.

**Vergleichsbeispiel 4**

Es wurde das Beispiel 1 aus der EP-A-0 490 665 nachgearbeitet.

**Vergleichsbeispiel 5**

Es wurde das Beispiel 1 aus der DE-A-16 94 404 nachgearbeitet.

**Vergleichsbeispiel 6**

Es wurde das Beispiel 15 aus der EP-A-0 061 769 nachgearbeitet.

**Vergleichsbeispiel 7**

Es wurde das Beispiel 1 aus der EP-B-0 088 635 nachgearbeitet.

**Tabelle 2**

| **Beispiel** | Foliendicke | Folienaufbau | Schichtdicke | | | Pigmente in den Schichten | | | mittlere Pigmentdurchmesser | | | Pigmentkonzentration | | |
|---|---|---|---|---|---|---|---|---|---|---|---|---|---|---|
| | µm | | A | B | C | A | B | C | A | B | C | A | B | C |
| | | | µm | | | | | | µm | | | ppm | | |
| **Beispiel 1** | 12 | ABC | 1,0 | 9,5 | 1,5 | Sylobloc 44 H Aerosil TT 600 | keine | Sylovlox 44 H Aerosil TT 600 | 2,5 0,04 | | 2,5 0,04 | 300 300 | 0 0 | 800 800 |
| **Beispiel 2** | 12 | ABC | 1,0 | 9,5 | 1,5 | Sylobloc 44 H Aerosil TT 600 | keine | Sylobloc 44 H Aerosil TT 600 | 2,5 0,04 | | 2,5 0,04 | 100 100 | 0 0 | 800 800 |
| **Beispiel 3** | 12 | ABC | 1,0 | 9,5 | 1,5 | Sylobloc 44 H Aerosil TT 600 | keine | Sylobloc 44 H Aerosil TT 600 | 2,5 0,04 | | 2,5 0,04 | 50 50 | 0 0 | 800 800 |
| **Beispiel 4** | 12 | ABC | 1,0 | 9,5 | 1,5 | Aerosil TT 600 | keine | Sylobloc 44 H Aerosil TT 600 | 2,5 0,04 | | 2,5 0,04 | 0 50 | 0 0 | 800 800 |
| **Beispiel 5** | 12 | ABC | 1,0 | 9,5 | 1,5 | Sylobloc 44 H | keine | Sylobloc 44 H Aerosil TT 600 | 2,5 | | 2,5 0,04 | 50 0 | 0 0 | 800 800 |
| **Beispiel 6** | 12 | ABC | 1,0 | 9,5 | 1,5 | | keine | Sylobloc 44 H Aerosil TT 600 | | | 2,5 0,04 | 0 0 | 0 0 | 800 800 |
| **Beispiel 7** | 12 | ABC | 1,0 | 9,5 | 1,5 | Sylobloc 44 H | keine | Sylobloc 44 H | 2,5 | | 2,5 | 200 | 0 | 1000 |
| **Beispiel 8** | 12 | ABC | 1,0 | 9,5 | 1,5 | Sylobloc 44 H | keine | Sylobloc 44 H | 2,5 | | 2,5 | 100 | 0 | 1000 |
| **VB 1** | 75 | ABA | 4 | 68 | 4 | Glasperlen Aerosil OX 50 | keine | Glasperlen Aerosil OX 50 | 2,7 0,04 | | 2,7 0,04 | 300 1200 | 0 0 | 300 1200 |
| **VB 2** | 60 | ABA | 1,5 | 63 | 1,5 | Tosperl 130’ | keine | Tosperl 130 | 3,0 | | 3,0 | 600 | 0 | 600 |

(fortgesetzt)

| **Beispiel** | Foliendicke | Folienaufbau | Schichtdicke | | | Pigmente in den Schichten | | | mittlere Pigmentdurchmesser | | | Pigmentkonzentration | | |
|---|---|---|---|---|---|---|---|---|---|---|---|---|---|---|
| | µm | | A | B | C | A | B | C | A | B | C | A | B | C |
| | | | µm | | | | | | µm | | | ppm | | |
| **VB 3** | 10 | A | - | - | - | Anatas - $TiO_2$ | | | 0,4 | | | 1500 | | |
| **VB 4** | 14 | A | - | - | - | 0 - $Al_2O_3$ | | | 0,2 | | | 3000 | | |
| **VB 5** | 25 | ABA | 2,5 | 20 | 2,5 | Kaolin | - | Kaolin | 4 | | 4 | 1250 | | 1250 |
| **VB 6** | 15 | AB | 7,5 | 7,5 | - | Zink Acetat<br>Antimon Trioxid | Kaolin +<br>Lubricant als<br>Beschichtung | | | | | 230<br>400 | | 5000 +<br>solution |
| **VB 7** | 12 | AB | 6 | | - | - | Internal Particles | | | 1,5 | | | | 2000 |

**Tabelle 3**

| Beispiel | Konstanten für die Höhenverteilung der Partikel | | Konstanten für die Dikkenverteilung der Partikel | | Sauerstoffbarriere | Reibung µk | | Rauhigkeit $R_a$ | | Glanz[i)] | | Trübung [i)] | Verarbeitungsverhalten |
|---|---|---|---|---|---|---|---|---|---|---|---|---|---|
| | $A_h$ A-Seite | $B_h$ C-Seite | $A_d$ A-Seite | $B_d$ C-Seite | $cm^3/m^2$ bar d | A/A | C/C | A-Seite | C-Seite | A-Seite | C-Seite | % | |
| | | | | | | | | nm | | | | | |
| **Beispiel 1** | 1,3 / 2,45 | 1,5 / 2,6 | 3,3 / 2,4 | 3,5 / 3,1 | 0,45 | 0,45 | 0,4 | 25 | 60 | 185 | 180 | 1,7 | sehr gut |
| **Beispiel 2** | 1,25 / 2,4 | 1,5 / 2,6 | 3,2 / 2,3 | 3,5 / 3,1 | 0,43 | 0,5 | 0,4 | 20 | 60 | 190 | 180 | 1,3 | sehr gut |
| **Beispiel 3** | 1,2 / 2,2 | 1,5 / 2,6 | 3,18 / 2,3 | 3,5 / 3,1 | 0,43 | 0,55 | 0,4 | 18 | 60 | 190 | 180 | 1,3 | sehr gut |
| **Beispiel 4** | 1,18 / 2,2 | 1,5 / 2,6 | 3,1 / 2,3 | 3,5 / 3,1 | 0,42 | 0,65 | 0,4 | 12 | 60 | 195 | 180 | 1,2 | gut |
| **Beispiel 5** | 1,16 / 2,2 | 1.5 / 2,6 | 3,1 / 2,3 | 3,5 / 3,1 | 0,41 | 0,65 | 0,4 | 15 | 60 | 195 | 180 | 1,1 | gut |
| **Beispiel 6** | 1,12 / 2,15 | 1,5 / 2,6 | 3,0 / 2,3 | 3,5 / 3,1 | 0,40 | 0,65 | 0,4 | 11 | 60 | 200 | 180 | 1,1 | gut |
| **Beispiel 7** | 1,25 / 2,4 | 1,65 / 2,7 | 3,3 / 2,3 | 2,8 / 3,1 | 0,42 | 0,55 | 0.3 | 25 | 70 | 190 | 160 | 1,3 | gut |
| **Beispiel 8** | 1,2 / 2,3 | 1,65 / 2,7 | 3,1 / 2,3 | 2,8 / 3,1 | 0,42 | 0,6 | 0,3 | 18 | 70 | 195 | 160 | 1,1 | gut |
| **VB 1** | | | | | 1,3 | 0,46 | 0,46 | 35 | 35 | 160 | 160 | 1,3 | gut |
| **VB 2** | | | | | 0,6 | 0,26 | 0,26 | 55 | 55 | 165 | 165 | 0,6 | mäßig |
| **VB 3** | | | | | 2,4 | 0,15 | | 10 | | 130 | | 7 | gut |
| **VB 4** | | | | | 3,1 | 0,2 | | 20 | | 120 | | 9 | gut |
| **VB 5** | | | | | 1,8 | 0,4 | | 75 | | 160 | | 1,5 | gut |
| **VB 6** | | | | | 0,8 | blockt | 0,4 | 3,6 | 15 | 165 | 130 | 9 | schlecht |

(fortgesetzt)

| **Beispiel** | Konstanten für die Höhenverteilung der Partikel | | Konstanten für die Dikkenverteilung der Partikel | | Sauerstoffbarriere | Reibung µk | | Rauhigkeit $R_a$ | | Glanz[i)] | | Trübung [i)] | Verarbeitungsverhalten |
|---|---|---|---|---|---|---|---|---|---|---|---|---|---|
| | A $_h$ A-Seite | B $_h$ C-Seite | A $_d$ A-Seite | B $_d$ C-Seite | $cm^3/m^2$ bar d | A/A | C/C | A-Seite nm | C-Seite nm | A-Seite | C-Seite | % | |
| **VB 7** | | | | | 0,45 | blockt | 0,3 | 3 | 14 | 180 | 150 | 5 | sehr schlecht |

[i)] Gemessen an der nicht metallisierten Folie
A-Seite: metallisierte Deckschicht
C-Seite: unmetallisierte Deckschicht

**Patentansprüche**

1. Biaxial orientierte, coextrudierte Polyesterfolie mit einer Basisschicht B, die zu mindestens 80 Gew.-% aus einem thermoplastischen Polyester besteht und einer oder mehreren weiteren Schichten, wobei mindestens eine äußere Deckschicht A interne Partikel, die als Präzipitate von Umesterungskatalysatoren aus der Gruppe der Mn- oder Ca-Salze bei der Rohstoffherstellung für die Deckschicht A entstehen, in einer Menge entsprechend einem Mn-Gehalt im Bereich von 50 bis 200 ppm oder einem Ca-Gehalt im Bereich von 50 bis 300 ppm enthält und inerte Partikel in einer Konzentration zwischen 0 und 0,08 Gew.-%, wobei die äußere Deckschicht A eine Anzahl von Erhebungen/Vorsprüngen N pro $mm^2$ Folienoberfläche aufweist, deren Höhen h größer als 0,01 μm und kleiner als 10 μm sind und deren Durchmesser d größer als 0,4 μm und kleiner als 10 μm sind, und wobei zwischen N und h die Gleichung (1)

$$\log N/mm^2 < A_h - B_h * \log h/\mu m \qquad (1)$$

mit $A_h$ = 1,4 und $B_h$ = 2,5 und zwischen N und d die Gleichung (2)

$$\log N/mm^2 < A_d - B_d * \log d/\mu m, \qquad (2)$$

mit $A_d$ = 3,4 und $B_d$ = 2,4 bestehen.

2. Polyesterfolie nach Anspruch 1, **dadurch gekennzeichnet, daß** die metallisierte oder die oxidisch beschichtete Folie eine Sauerstoffbarriere von ≤ 0,5 $cm^3/m^2$ ·bar ·d aufweist.

3. Polyesterfolie nach Anspruch 1 oder 2, **dadurch gekennzeichnet, daß** die metallisierte oder die oxidisch beschichtete Folie eine Sauerstoffbarriere von ≤ 0,45 $cm^3/m^2$ ·bar ·d aufweist.

4. Polyesterfolie nach einem oder mehreren der Ansprüche 1 bis 3, **dadurch gekennzeichnet, daß** die Schicht A eine höhere Glasübergangstemperatur aufweist als die Basisschicht B.

5. Polyesterfolie nach einem oder mehreren der Ansprüche 1 bis 4, **dadurch gekennzeichnet, daß** die äußere Schicht A eine Dicke von 0,1 bis 3,0 μm aufweist.

6. Polyesterfolie nach einem oder mehreren der Ansprüche 1 bis 5, **dadurch gekennzeichnet, daß** die Folie zweischichtig aufgebaut ist und aus der Basisschicht B und der Deckschicht A besteht.

7. Polyesterfolie nach einem oder mehreren der Ansprüche 1 bis 6, **dadurch gekennzeichnet, daß** die Folie dreischichtig aufgebaut ist und aus einer äußeren Deckschicht A, der Basisschicht B und einer zweiten Deckschicht C besteht, welche auf der der Deckschicht A gegenüberliegenden Seite der Basisschicht B aufgebracht ist.

8. Polyesterfolie nach Anspruch 7, **dadurch gekennzeichnet, daß** die Deckschicht C pigmentiert ist.

9. Polyesterfolie nach einem oder mehreren der Ansprüche 1 bis 7, **dadurch gekennzeichnet, daß** die Deckschicht A pigmentiert ist.

10. Polyesterfolie nach einem oder mehreren der Ansprüche 1 bis 9, **dadurch gekennzeichnet, daß** mindestens eine äußere Deckschicht in line beschichtet ist.

11. Verfahren zur Herstellung einer biaxial orientierten, mehrschichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei mindestens eine äußere Deckschicht A interne Partikel, die als Präzipitate von Umesterungskatalysatoren aus der Gruppe der Mn- oder Ca-Salze bei der Rohstoffherstellung für die Deckschicht A entstehen, in einer Menge entsprechend einem Mn-Gehalt im Bereich von 50 bis 200 ppm oder einem Ca-Gehalt im Bereich von 50 bis 300 ppm enthält und inerte Partikel in einer Konzentration zwischen 0 und 0,08 Gew.-%, wobei die äußere Deckschicht A eine Anzahl von Erhebungen/Vorsprüngen N pro $mm^2$ Folienober-

fläche aufweist, deren Höhen h größer als 0,01 µm und kleiner als 10 µm sind und deren Durchmesser d größer als 0,4 µm und kleiner als 10 µm sind, und wobei zwischen N und h die Gleichung (1)

$$\log N/mm^2 < A_h - B_h * \log h/\mu m \qquad (1)$$

mit $A_h$ = 1,4 und $B_h$ = 2,5 und zwischen N und d die Gleichung (2)

$$\log N/mm^2 < A_d - B_d * \log d/\mu m, \qquad (2)$$

mit $A_d$ = 3,4 und $B_d$ = 2,4 bestehen.

**12.** Verfahren zur Herstellung einer biaxial orientierten, mehrschichtigen Polyesterfolie nach Anspruch 11, bei dem Regenerat in einer Konzentration von 10 bis 50 Gew.-%, bezogen auf das Gesamtgewicht der Folie, der Extrusionsdüse zugeführt wird.

**13.** Verwendung der Folie nach einem oder mehreren Ansprüchen 1 bis 10 zum Verpacken von Lebens- und Genußmittel.

**14.** Verwendung der Folie nach einem oder mehreren Ansprüchen 1 bis 10 für die Herstellung von Prägefolien.

## Claims

**1.** A biaxially oriented, coextruded polyester film with a base layer B which is composed to an extent of at least 80 % by weight of a thermoplastic polyester, and with one or more other layers, where at least one external outer layer A comprises internal particles produced as precipitates from transesterification catalysts from the group of the Mn or Ca salts during the preparation of the polymer for the outer layer A, where the amount of these corresponds to a Mn content in the range from 50 to 200 ppm or to a Ca content in the range from 50 to 300 ppm, and inert particles at a concentration of from 0 to 0.08% by weight, where the external outer layer A has a number N per $mm^2$ of elevations/protrusions whose height h is greater than 0.01 µm and smaller than 10 µm, and whose diameter d is greater than 0.4 µm and smaller than 10 µm, and where the equation (1) relates N and h

$$\log N/mm^2 < A_h - B_h * \log h/\mu m \qquad (1)$$

where $A_h$ = 1.4 and $B_h$ = 2.5, and the equation (2) relates N and d

$$\log N/mm^2 < A_d - B_d * \log d/\mu m \qquad (2)$$

where $A_d$ = 3.4 and $B_d$ = 2.4.

**2.** A polyester film as claimed in claim 1, wherein the metalized or oxidically coated film has an oxygen transmission of ≤ 0.5 $cm^3/m^2 \cdot bar \cdot d$.

**3.** A polyester film as claimed in claim 1, wherein the metallized or oxidically coated film has an oxygen transmission of ≤ 0.45 $cm^3/m^2 \cdot bar \cdot d$.

**4.** A polyester film as claimed in one or more of claims 1 to 3, wherein the layer A has a higher glass transition temperature than the base layer B.

**5.** A polyester film is claimed in one or more of claims 1 to 4, wherein the outer layer A has a thickness of from 0.1 to

3.0 μm.

**6.** A polyester film as claimed in one or more of claims 1 to 5, which is composed of two layers, these being the base layer B and the outer layer A.

**7.** A polyester film as claimed in one or more of claims 1 to 6, which is composed of three layers, being composed of an outward-facing outer layer A, the base layer B, and a second outer layer C, which has been applied to the side of the base layer B opposite to the outer layer A.

**8.** A polyester film as claimed in claim 7, wherein the outer layer C has been pigmented.

**9.** A polyester film as claimed in one or more of claims 1 to 7, wherein the outer layer A has been pigmented.

**10.** A polyester film as claimed in one or more of claims 1 to 9, wherein at least one outward-facing outer layer has been in-line coated.

**11.** A process for producing a biaxially oriented, multilayer polyester film as claimed in claim 1, in which polyester melts corresponding to the formulations of the outer and base layers are fed to a coextrusion die, and extruded from this onto a cooling roll, and the resultant prefilm is then biaxially oriented and heat-set, where at least one external outer layer A comprises internal particles produced as precipitates from transesterification catalysts from the group of the Mn or Ca salts during the preparation of the polymer for the outer layer A, where the amount of these corresponds to a Mn content in the range from 50 to 200 ppm or to a Ca content in the range from 50 to 300 ppm, and inert particles at a concentration of from 0 to 0.08% by weight, where the external outer layer A has a number N per $mm^2$ of elevations/protrusions whose height h is greater than 0.01 μm and smaller than 10 μm, and whose diameter d is greater than 0.4 μm and smaller than 10 μm, and where the equation (1) relates N and h

$$\log N/mm^2 < A_h - B_h * \log h/\mu m \qquad (1)$$

where $A_h = 1.4$ and $B_h = 2.5$, and the equation (2) relates N and d

$$\log N/mm^2 < A_d - B_d * \log d/\mu m \qquad (2)$$

where $A_d = 3.4$ and $B_d = 2.4$.

**12.** A process for producing a biaxially oriented, multilayer polyester film, as claimed in claim 11, in which rework is introduced to the extrusion die in a concentration of from 10 to 50 % by weight, based on the total weight of the film.

**13.** The use of a film as claimed in one or more of claims 1 to 10 for packaging of foodstuffs and luxury foods.

**14.** The use of a film as claimed in one or more of claims 1 to 10 for the production of hot-stamping foils.

## Revendications

**1.** Film de polyester coextrudé, orienté biaxialement, comportant une couche de base B qui consiste à raison d'au moins 80 % en poids en un polyester thermoplastique et une ou plusieurs autres couches, au moins une couche de recouvrement externe A contenant des particules internes qui sont formées en tant que précipités de catalyseurs de transestérification choisis dans le groupe des sels de Mn ou Ca lors de la préparation de matières premières pour la couche de recouvrement A, en une quantité correspondant à une teneur en Mn dans la plage de 50 à 200 ppm ou à une teneur en Ca dans la plage de 50 à 300 ppm, et des particules inertes à une concentration comprise entre 0 et 0,08 % en poids, la couche de recouvrement externe A présentant un nombre de saillies/protubérances N par $mm^2$ de surface du film, dont les hauteurs h sont supérieures à 0,01 μm et inférieures à 10 μm et dont le diamètre d est supérieur à 0,4 μm et inférieur à 10 μm, et entre N et h existant la relation (1)

$$\log N/mm^2 < A_h - B_h \times \log h/\mu m \qquad (1)$$

où $A_h$ = 1,4 et $B_h$ = 2,5 et entre N et d existant la relation (2)

$$\log N/mm^2 < A_d - B_d \times \log d/\mu m) \qquad (2)$$

où $A_d$ = 3,4 et $B_d$ = 2,4.

2. Film de polyester selon la revendication 1, **caractérisé en ce que** le film métallisé ou le film revêtu d'oxyde présente une barrière à l'oxygène inférieure ou égale à 0,5 $cm^3/m^2$.bar.d.

3. Film de polyester selon la revendication 1 ou 2, **caractérisé en ce que** le film métallisé ou le film revêtu d'oxyde présente une barrière à l'oxygène inférieure ou égale à 0,45 $cm^3/m^2$.bar.d.

4. Film de polyester selon une ou plusieurs des revendications 1 à 3, **caractérisé en ce que** la couche A présente une plus haute température de transition vitreuse que la couche de base B.

5. Film de polyester selon une ou plusieurs des revendications 1 à 4, **caractérisé en ce que** la couche externe A présente une épaisseur de 0,1 à 3,0 $\mu$m.

6. Film de polyester selon une ou plusieurs des revendications 1 à 5, **caractérisé en ce que** le film a une structure bicouche et est constitué de la couche de base B et de la couche de recouvrement A.

7. Film de polyester selon une ou plusieurs des revendications 1 à 6, **caractérisé en ce que** le film a une structure tricouche et est constitué d'une couche de recouvrement externe A, de la couche de base B et d'une deuxième couche de recouvrement C qui est appliquée sur la face opposée à la couche de recouvrement A de la couche de base B.

8. Film de polyester selon la revendication 7, **caractérisé en ce que** la couche de recouvrement C est pigmentée.

9. Film de polyester selon une ou plusieurs des revendications 1 à 7, **caractérisé en ce que** la couche de recouvrement A est pigmentée.

10. Film de polyester selon une ou plusieurs des revendications 1 à 9, **caractérisé en ce qu'**au moins une couche de recouvrement externe est appliquée en ligne.

11. Procédé pour la fabrication d'un film de polyester multicouche orienté biaxialement, selon la revendication 1, dans lequel des masses fondues de polyester correspondant aux compositions des couches de base et de recouvrement sont envoyées à une filière multicouche, de celle-ci sont extrudées sur un cylindre refroidisseur et le préfilm ainsi obtenu est ensuite étiré biaxialement et thermofixé, au moins une couche de recouvrement externe A contenant des particules internes qui sont formées en tant que précipités de catalyseurs de transestérification choisis dans le groupe des sels de Mn ou Ca lors de la préparation de matières premières pour la couche de recouvrement A, en une quantité correspondant à une teneur en Mn dans la plage de 50 à 200 ppm ou à une teneur en Ca dans la plage de 50 à 300 ppm, et des particules inertes à une concentration comprise entre 0 et 0,08 % en poids, la couche de recouvrement externe A présentant un nombre de saillies/protubérances N par $mm^2$ de surface du film, dont les hauteurs h sont supérieures à 0,01 $\mu$m et inférieures à 10 $\mu$m et dont le diamètre d est supérieur à 0,4 $\mu$m et inférieur à 10 $\mu$m, et entre N et h existant la relation (1)

$$\log N/mm^2 < A_h - B_h \times \log h/\mu m \qquad (1)$$

où $A_h$ = 1,4 et $B_h$ = 2,5 et entre N et d existant la relation (2)

$$\log N/mm^2 < A_d - B_d \times \log d/\mu m \qquad (2)$$

où $A_d$ = 3,4 et $B_d$ = 2,4.

**12.** Procédé pour la fabrication d'un film de polyester multicouche orienté biaxialement, selon la revendication 11, dans lequel du produit de régénération est envoyé à la filière d'extrusion à une concentration de 10 à 50 % en poids, par rapport au poids total du film.

**13.** Utilisation du film selon une ou plusieurs des revendications 1 à 10, pour le conditionnement de produits alimentaires et autres produits de consommation.

**14.** Utilisation du film selon une ou plusieurs des revendications 1 à 10, pour la fabrication de films gaufrés.

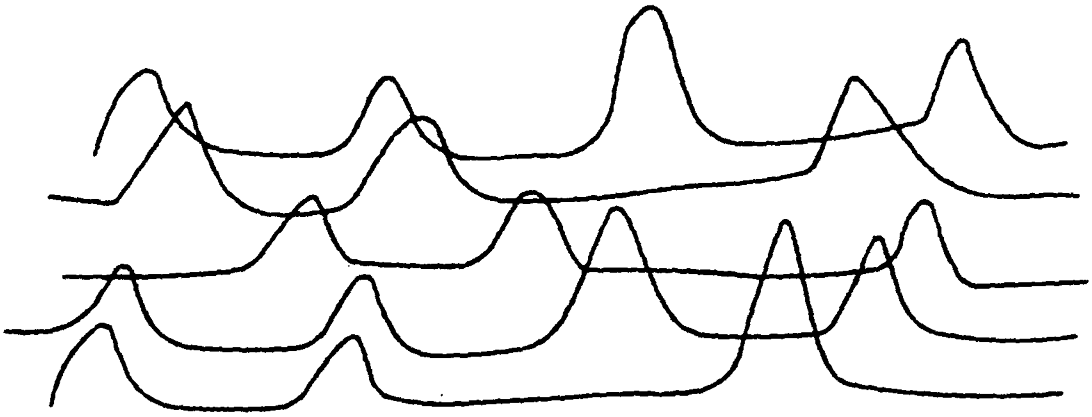

Sauerstoffbarriere OTR: 0,4 $cm^3/m^2$ d bar
Rauhigkeitswert $R_a$: 55 nm

Fig.1a: Sehr gute Sauerstoffbarriere

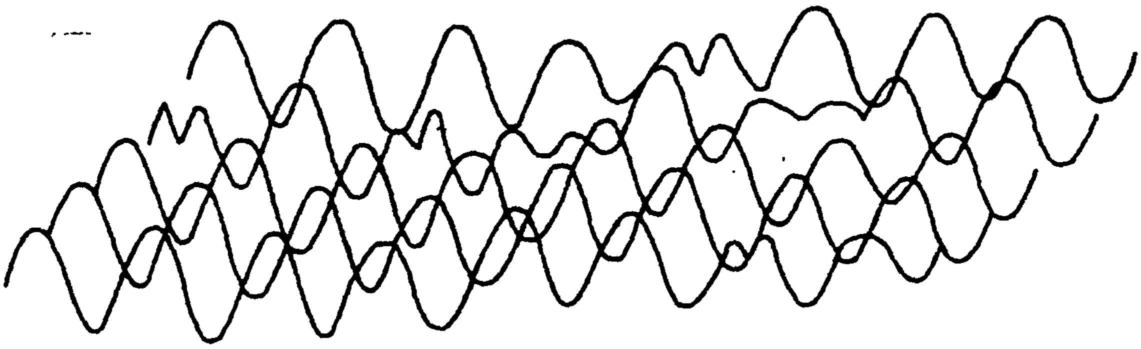

Sauerstoffbarriere OTR: 3,2 $cm^3/m^2$ b bar
Rauhigkeitswert $R_a$: 8 nm

Fig.1b: Schlechte Sauerstoffbarriere

Fig.2a

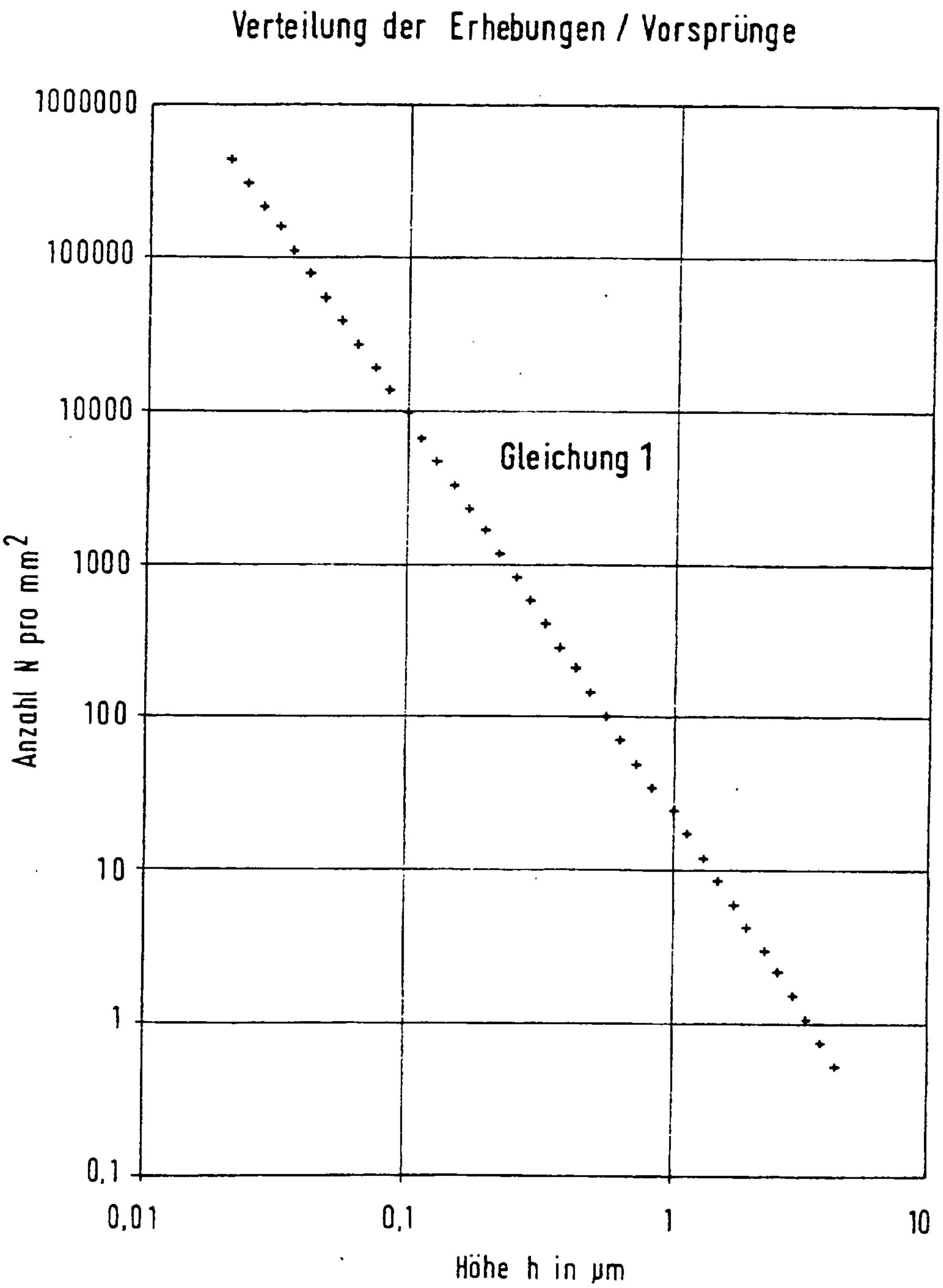
Verteilung der Erhebungen / Vorsprünge
1000000
100000
10000
1000
100
10
1
0,1
Anzahl N pro mm²
Gleichung 1
0,01
0,1
1
10
Höhe h in µm

Fig. 2b

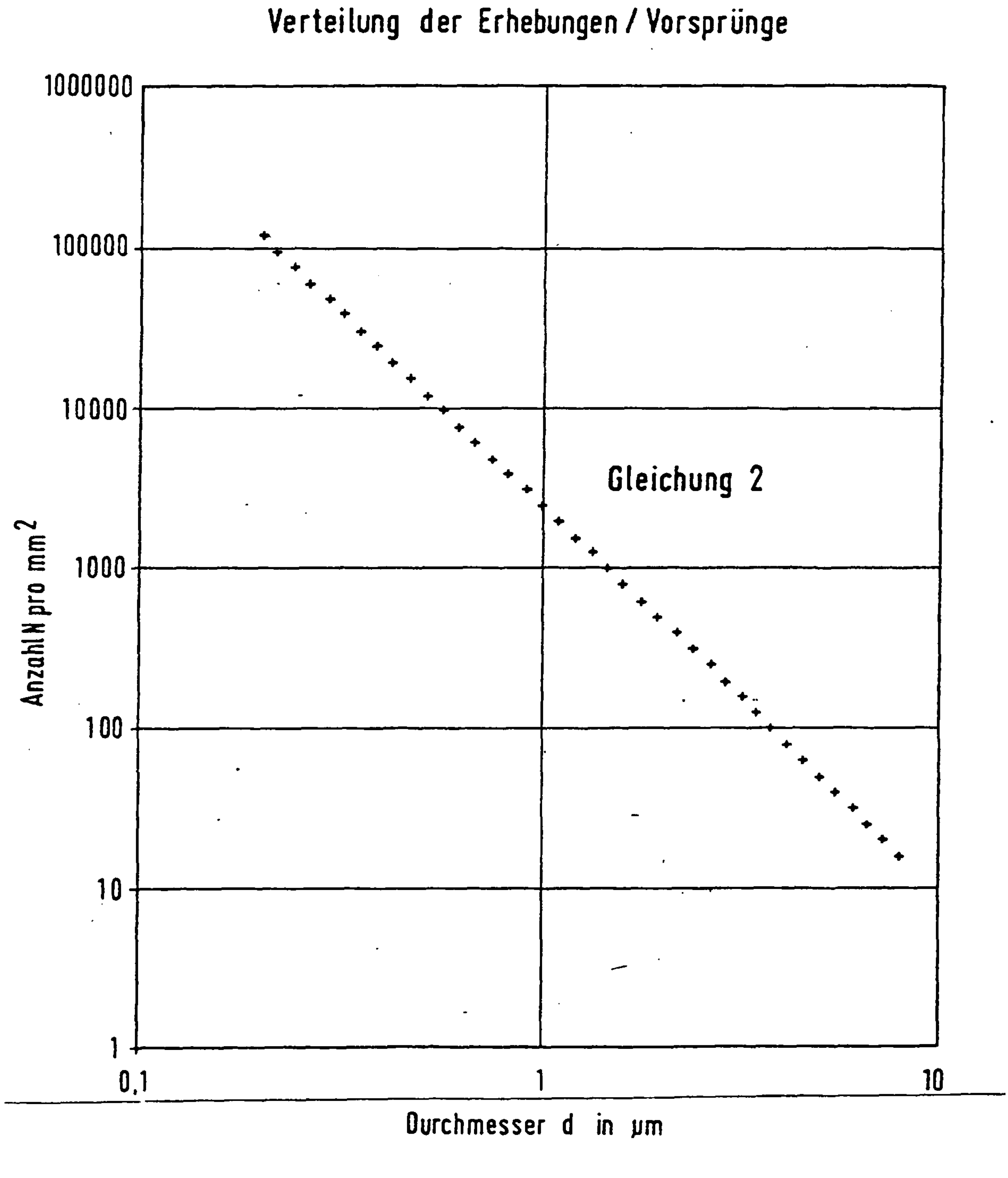
Verteilung der Erhebungen / Vorsprünge
1000000
100000
10000
1000
100
10
1
Anzahl N pro mm2
Gleichung 2
0,1
1
10
Durchmesser d in µm

Fig.3

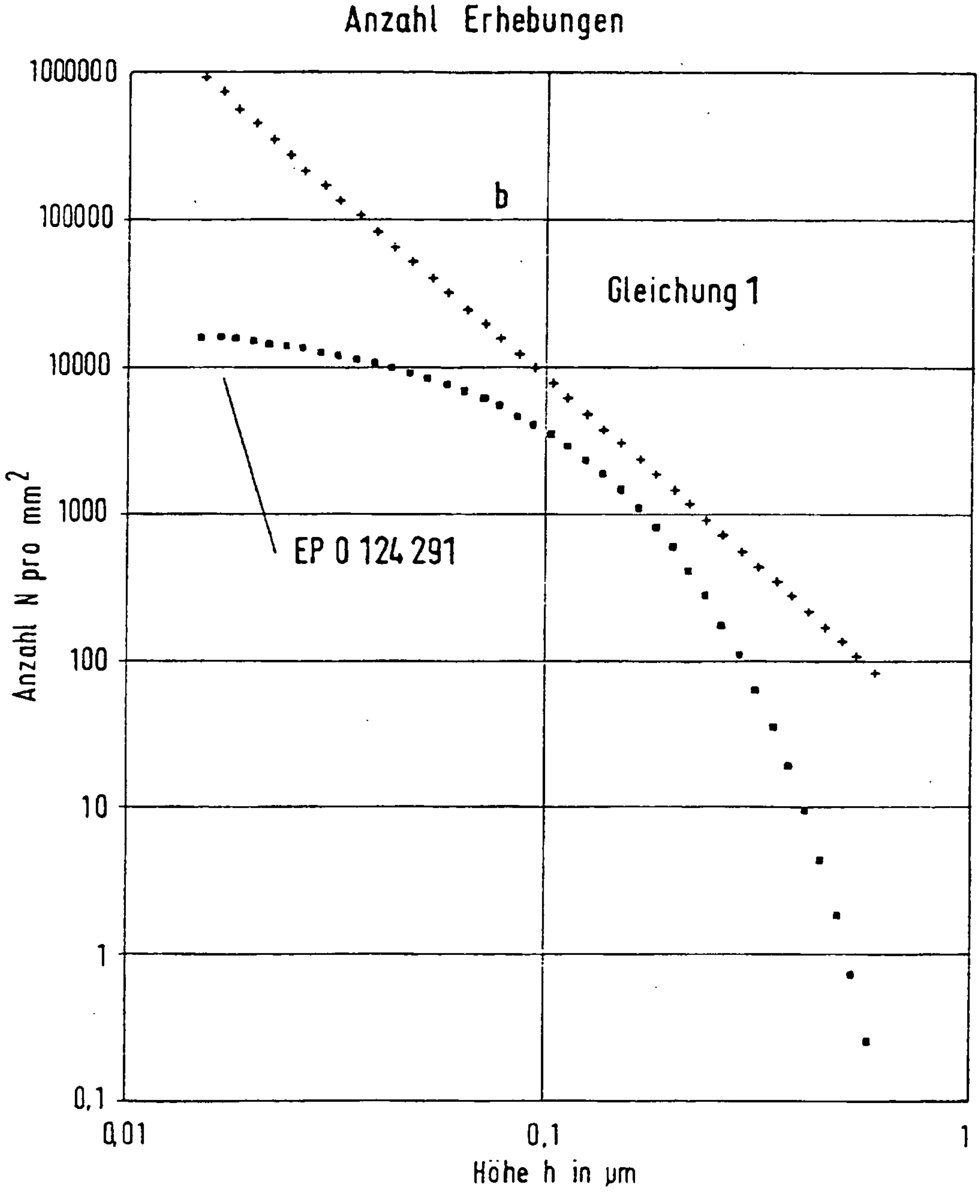
Anzahl Erhebungen
1000000
100000
10000
1000
100
10
1
0,1
Anzahl N pro mm2
b
Gleichung 1
EP 0 124 291
0,01
0,1
1
Höhe h in µm

Fig.4

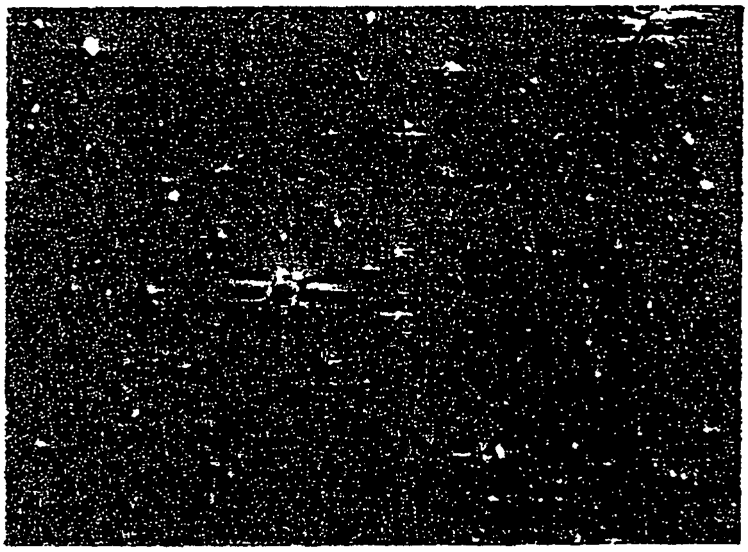

Fig.5

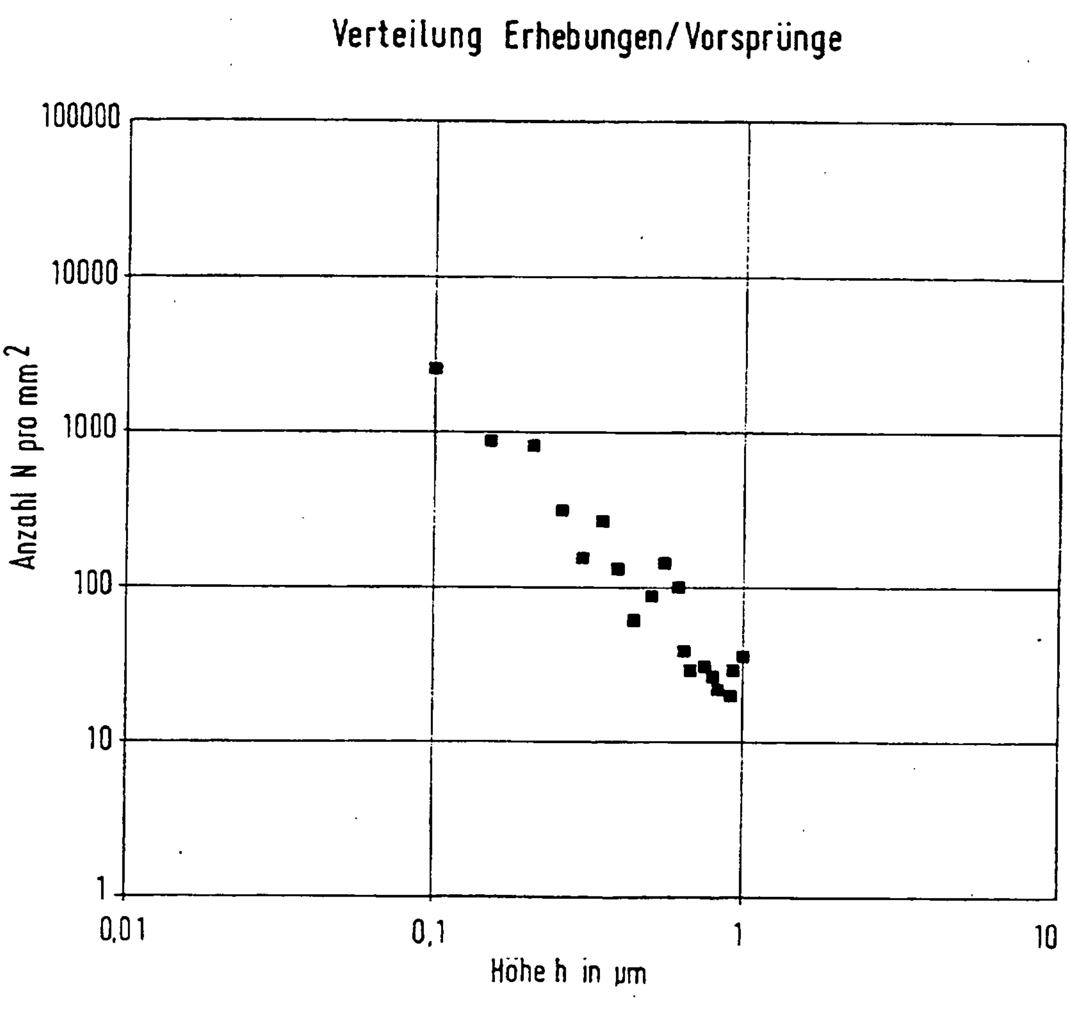
Verteilung Erhebungen/Vorsprünge
100000
10000
1000
100
10
1
Anzahl N pro mm 2
0,01
0,1
1
10
Höhe h in µm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0514129 A
- EP 0604057 A
- EP 0624454 A
- EP 0368278 A
- EP 0124291 A
- EP 0490665 A1
- DE 1694404 A
- DE 2230970 A
- EP 0061769 B
- EP 0088635 B
- EP 0502745 B
- US 5506014 A
- EP 0490665 A
- EP 0602964 A
- EP 0061769 A


### In der Beschreibung aufgeführte Nicht-Patentliteratur


- *Thin Solids Films,* 1991, vol. 204, 203-216
- **SCHRICKER, G.** Metallisierte Kunststoffolien für höherwertige Verpackungen. *ICI 5th International Metallising Symposium,* 1986